Europäisches Patentamt

European Patent Office

Office européen des brevets

(19)

(11) **EP 0 800 495 B1**

(12) **EUROPÄISCHE PATENTSCHRIFT**

(45) Veröffentlichungstag und Bekanntmachung des Hinweises auf die Patenterteilung:
**09.12.1998 Patentblatt 1998/50**

(21) Anmeldenummer: **95931193.7**

(22) Anmeldetag: **23.08.1995**

(51) Int Cl.6: **C04B 35/65**, C04B 35/117, C22C 1/10

(86) Internationale Anmeldenummer:
**PCT/EP95/03347**

(87) Internationale Veröffentlichungsnummer:
**WO 96/20902 (11.07.1996 Gazette 1996/31)**

(54) **HERSTELLUNG EINES ALUMINIDHALTIGEN KERAMISCHEN FORMKÖRPERS**

PRODUCTION OF AN ALUMINIDE-CONTAINING CERAMIC MOULDING

PRODUCTION D'UN CORPS MOULE CERAMIQUE CONTENANT DE L'ALUMINURE

(84) Benannte Vertragsstaaten:
**DE GB**

(30) Priorität: **29.12.1994 DE 4447130**

(43) Veröffentlichungstag der Anmeldung:
**15.10.1997 Patentblatt 1997/42**

(73) Patentinhaber: **CLAUSSEN, Nils**
**D-21224 Rosengarten (DE)**

(72) Erfinder:
• **CLAUSSEN, Nils**
**D-21224 Rosengarten (DE)**
• **GARCIA, Daniel, E.**
**D-21075 Hamburg (DE)**

• **JANSSEN, Rolf**
**D-21075 Hamburg (DE)**

(74) Vertreter: **Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm,**
**Kopernikusstrasse 9**
**81679 München (DE)**

(56) Entgegenhaltungen:
**EP-A- 0 253 497        EP-A- 0 490 245**
**EP-A- 0 577 116        EP-A- 0 667 325**
**US-A- 5 340 533**

## Beschreibung

Das in den dreißiger Jahren entwickelte Hartmetall (Co-gebundenes WC), das sich bis heute in zahlreichen Varianten aufgrund seiner guten Verschleißfestigkeit erfolgreich behauptet, stand immer wieder Pate für Versuche, auch nichtkarbidische Keramiken mit metallischen Phasen duktiler zu machen. Insbesondere in den sechziger Jahren, in denen auch der Begriff Cermets geprägt wurde (siehe z.B "Aufbau und Eigenschaften von Cermets" Z. Metallkde., 59 (1968) 170) konzentrierten sich zahlreiche Versuche auf Oxidkeramiken, bei denen eine Minderung der Sprödigkeit die Aussichten für einen erhöhten technischen Einsatz wesentlich verbessert hätte. Die erstrebte vorteilhafte Kombination der guten Duktilität und Rißzähigkeit der Metalle mit den hervorragenden Hochtemperatureigenschaften, der Verschleißfestigkeit und der Härte der Keramiken blieb jedoch in fast allen Fällen aus. Im Gegenteil, die Cermets vereinigten die negativen Eigenschaften beider Materialklassen . Eine Ursache hierfür liegt in der typischerweise sehr schlechten Benetzung von Oxidkeramiken durch flüssige Metalle, so daß beim Flüssigphasensintern die metallische Phase aus dem Formkörper herausschwitzt. Um dies zu vermeiden, müssen derartige Verbundkörper heißgepreßt oder heißgeschmiedet werden, wie es z.B. am System $Al_2O_3$-Al durchgeführt wurde (UK-Patent 2,070,068A; US Patent 5,077,246). Eine andere Ursache für das schlechte mechanische Verhalten ist im charakteristischen Gefügeaufbau der Cermets zu sehen, der typischerweise aus einem pulvermetallurgischen Gemenge beider Phasen resultiert. Die keramische Komponente ist dabei hauptsächlich in einer metallischen Matrix eingebettet, die oft weniger als 20 Vol.-% ausmacht (siehe z.B. "Processing of $Al_2O_3$/Ni Composites", J.Eur. Ceram. Sco., 10 (1992) 95). Bei den metallgebundenen Carbiden oder boridischen Cermets kann die keramische Phase zwar zusätzlich ein Gerüst bilden, trotzdem sind bei den meisten Cermets die metallischen Eigenschaften dominierend ("Cermets", Reinhold Publ. Co., New York, 1960). Heute werden fast nur noch carbidische Kombinationen, insbesondere TiC-Ni, als Cermets bezeichnet.

Neue Verstärkungskonzepte für keramische Werkstoffe beruhen auf dem Einbau einer zweiten Phase in die keramische Matrix, so daß die positiven Eigenschaften der Keramik im wesentlichen erhalten bleiben. Beispiele dafür sind umwandlungsfähige $ZrO_2$- Teilchen ("Strengthening Strategies for $ZrO_2$-Toughened Ceramics at High Temperatures", J. Mat. Sci. Eng., 71 (1985) 23) oder SiC-Whisker ("TZP Reinforced with SiC Whiskers", J.Am.Ceram. Soc., 69 (1986) 288) in einer $Al_2O_3$-Matrix. Den Einbau von Metallen hielt man zunächst nicht für sinnvoll, da nach herkömmlichen Verbundwerkstofftheorien Metalle mit niedriger Fließgrenze und geringem Elastizitätsmodul harte und steife Keramiken besonders hinsichtlich ihrer Festigkeit nicht verbessern könnten. Zwar konnte kürzlich gezeigt werden, daß dies nicht immer zutrifft ("Effect of Microstructure on Thermal Shock Resistance of Metal-Reinforced Ceramics", J. Am. Ceram. Soc. 77 (1994) 701 und "Metalle verbessern mechanische Eigenschaften von Keramiken", Spektrum der Wissenschaft, Januar (1993) 107). Allerdings ist die erzielte Verstärkung nur möglich, wenn der Gefügeaufbau der klassischen Cermets auf den Kopf gestellt wird, d.h. die Keramik eine feste Matrix bildet, in die eine durchdringende einkristalline metallische Phase eingebettet ist. In diesem Fall wäre mit der Bezeichnung "Metcers" die Vertauschung der Gefügebausteine auch begrifflich charakterisiert. Außer dem veränderten Gefügeaufbau dieser Verbundwerkstoffe ist aber auch die erheblich kleinere Dimension der Metallphase für die Verbesserung gegenüber den klassischen Cermets verantwortlich. Das in der keramischen Matrix eingebettete Metall weist wesentlich bessere mechanische Eigenschaften auf als im 'freien' Zustand, was sogar für sonst spröde intermetallische Phasen zuzutreffen scheint ("Metcers - a Strong Variant of Cermets", Cfi/Ber. DKG 71 (1994) 301).

Zur Herstellung dieser neuartigen Metall-Keramik-Verbundwerkstoffe sind bislang verschiedene Methoden zur Anwendung gelangt, wie zum Beispiel die gerichtete Schmelzoxidation (DMO), bei der ein Al/$Al_2O_3$-Verbundwerkstoff auf einer Al-Schmelze durch Oxidation an Luft aufwächst (siehe z.B. "Formation of Lanxide™ Ceramic Composite Materials", J. Mat. Res., 1 (1986) 81 und "Directed Oxidation of Molten Metals", in: Encyclopedia of Mat. and Eng. (Ed. R.W.Cahn), Supplementary Vol. 2, Pergamon, Oxford (1990) 1111). Andere praktikable Verfahren sind das Druckgießen ("Application of the Infiltration Technique to the Manufacture of Cermets", Ber. Dt. Keram. Ges., 48 (1971) 262-8) und die Infiltration poröser keramischer Vorformen mit aufgeschmolzenem Metall ("Method for Processing Metal-Reinforced Ceramic Composites", J. Am. Ceram. Soc., 73 [2] 388-393 (1990). Die Gasdruckinfiltration bietet die Möglichkeit, auch nicht benetzende Metalle in die keramische Vorform zu infiltrieren (siehe z.B. "Microstructure and Properties of Metal Infiltrated RBSN Composites" J. Eur. Ceram. Soc. 9 (199161-65). Dabei wird zunächst das Metall unter Vakuum aufgeschmolzen und nach Erreichen der Infiltrationstemperatur, die meist 100 bis 200°C über der Schmelztemperatur liegt, die Keramik in die Schmelze getaucht und ein Gasdruck aufgebaut. Dieses Verfahren eignet sich auch für hochschmelzende Metalle, die durch herkömmliches Druckgießen nicht infiltrierbar wären, ist jedoch sehr aufwendig.

Ein weiteres Verfahren, bei dem ein Al-durchzogener $Al_2O_3$-Körper entsteht, basiert auf der Reaktionsinfiltrierung (Reactive Metal Infiltration) $SiO_2$-haltiger keramischer Vorkörper (siehe z.B. "$Al_2O_3$/Al Co-Contiuous Ceramic Composite (C⁴) Materials Produced by Solid/Liquid Displacement Reactions: Processing, Kinetics and Microstructures", Ceram. Eng. Sci. Proc. 15 (1994) 104).

Al- und $Al_2O_3$-haltige Verbundkörper lassen sich außerdem durch Thermitreaktionen (SHS: Self-Propagating High-Temperature Synthesis) herstellen. Es wurden bisher eine Vielzahl derartiger Reaktionen untersucht, die alle nach dem Schema:

$$MO + Al \rightarrow Al_2O_3 + M$$

ablaufen, wobei M ein Metall und MO das entsprechende Oxid ist (siehe z.B. "Combustion Synthesis of Ceramic and Metal-Matrix Composites", J. Mat. Synth. Proc. 2 (1994) 71 und "Thermodynamic Analysis of Thermite-Based Reaction for Synthesis of Oxide-$B_4C$ Composites", J. Mat. Synth. Proc., 2 (1944) 217 und 227). Alle SHS-Verbundwerkstoffe sind aufgrund unkontrollierbarer Hitzeentwicklung (infolge der großen Exothermie der Reaktion) porös, inhomogen und von einer groben Gefügestruktur. Ihre Festigkeit liegt daher selten über 100 MPa, so daß eine Anwendung als Konstruktionselement nicht in Frage kommt.

Es ist seit langem das Ziel der Werkstofforschung, auf vielen Gebieten Metalle durch intermetallische Verbindungen auch in Metall-Keramik-Verbundwerkstoffen zu ersetzen. Besonders die intermetallischen Verbindungen des Al(Aluminide) sind hier u.a. aufgrund ihres geringen spezifischen Gewichts, ihrer guten Hochtemperaturfestigkeit und ihrer Oxidationsbeständigkeit gefragt (siehe z.B. "Intermetallic Compounds", Mat. Res. Soc. Proc. Vol. 288, 1993). Die pulvermetallurgische Herstellung von Aluminiden mit keramischen Phasen ist bisher jedoch außergewöhnlich aufwendig, da einerseits die Aluminidpulverherstellung aufgrund extrem inerter Bedingungen sehr teuer ist und andererseits eine völlige Verdichtung nur durch Heißpressen, Heißschmieden, Heißextrudieren oder Heißisostatpressen oder Explosivformen möglich ist (siehe u.a. "Powder Processing of Intermetallics and Intermetallic Matrix Composites (IMC)" p: 93-124 in Processing and Fabrication of Advanced Materials for High-Temperature Applications-II, ed. V.A. Ravi etal, The Min. Met. Mat. Soc., 1993). Außerdem stellt in allen Fällen das Aluminid die Matrix dar, während $Al_2O_3$ als disperse Phase mit einem Volumenanteil unter 50% dispergiert ist (siehe z.B. "A Review of Recent Developments in $Fe_3Al$-Based Alloys", J. Mat. Res. 6 (1991) 1779 and "Powder Processing of High Temperature Aluminide-Matrix Composites", H-T Ordered Intermetallic Alloys III, 133 (1988) 403). Bei der Herstellung solcher Verbundwerkstoffe besteht zwar die Möglichkeit, Reaktionswärmen auszunutzen, indem man zwei oder mehrere Metalle miteinander zum gewünschten Aluminid reagieren läßt, aber in allen bisher untersuchten Fällen kommt es auch hierbei zu groben und inhomogenen Gefügeausbildungen, so daß mechanische Eigenschaften entweder gar nicht gemessen wurden ("Reactive Sintering Nickel-Aluminide to Near Full Density", PMI 20 (1988) 25) oder aber die vorgeformten Körper in einem weiteren Schritt heißnachverdichtet werden müssen ("SHS of TiAl-SiC and TiAl-$Al_2O_3$ Intermetallics Composites", J.Mater. Sci. Let., 9 (1990) 432).

Alle bisher bekannten Verbundwerkstofftypen und ihre Herstellungsverfahren haben charakteristische Nachteile. Das Druckgußverfahren ist beispielsweise aus technischen Gründen (kein geeignetes Druckbehältermaterial vorhanden) nur für Al-Legierungen, nicht aber für hochschmelzende Aluminide geeignet. Ähnliches gilt für die Gasdruckinfiltration, bei der Aluminide nur bei Temperaturen weit über 1400°C infiltriert werden könnten. Außerdem müßte hier der infiltrierte Verbundkörper aus der erstarrten Aluminidschmelze noch herausgearbeitet werden, was nur mit großem Aufwand und nur für einfache Geometrien möglich ist. Die Reaktionsformverfahren DMO und $C^4$ sind nur für $Al_2O_3$-Körper mit Si- oder Mg-haltigen Al-Legierungen, d.h. nicht für aluminidhaltige Legierungen anwendbar. Außerdem sind die Reaktionsgeschwindigkeiten mit durchschnittlich 2 cm/Tag extrem langsam, womit die Prozeßdauer übermäßig lang wird. Alle pulvermetallurgischen Verfahren haben bisher zu den für oxidkeramische Cermets typischen Nachteilen geführt, d.h. die Gefüge sind ohne heiße Nachverdichtung porös, grob (meist sind die Gefügebestandteile weit größer als 10 μm) und inhomogen, so daß man eine unzureichende Festigkeit und Bruchzähigkeit erhält.

Aufgabe der Erfindung ist es daher, $Al_2O_3$-Matrix-Verbundwerkstoffkörper herzustellen, die von Aluminiden durchwachsen sind und die gegebenenfalls weitere metallische und keramische Komponenten enthalten können, und welche die zuvor aufgeführten Nachteile nicht aufweisen.

Gelöst wird diese Aufgabe erfindungsgemäß durch ein Verfahren zur Herstellung eines keramischen Formkörpers enthaltend a) 5 bis 70 Vol.-% mindestens einer intermetallischen AluminidPhase, die gegebenenfalls zusätzlich Aluminium oder/und Aluminiumlegierung enthält und b) 30 bis 95 Vol.-% $Al_2O_3$ und gegebenenfalls eine oder mehrere weitere keramische Phasen, wobei die keramischen Phasen ein festes zusammenhängendes Gerüst bilden und die intermetallische Phase aus im Mittel 0,1 bis 10 μm großen, überwiegend miteinander verbundenen Bereichen besteht, welches dadurch gekennzeichnet ist, daß man einen pulvermetallurgisch geformten Grünkörper, der aus einem Gemisch der feinstteiligen Pulver von Aluminium, einer oder mehreren keramischen Substanzen und gegebenenfalls weiteren Metallen besteht mit der Maßgabe, daß mindestens ein oxidkeramisches oder/und metallisches Pulver im Gemisch enthalten ist, welches beim Sintern mit dem Aluminium unter Bildung eines Aluminids und gegebenenfalls von $Al_2O_3$ reagiert, in einer nicht oxidierenden Atmosphäre sintert.

Beim erfindungsgemäßen Verfahren reagiert das Aluminium unter den angegebenen Bedingungen ganz oder teilweise mit einem Oxid und/oder einem Metall zu dem gewünschten Aluminid und gegebenenfalls zusätzlich zu $Al_2O_3$.

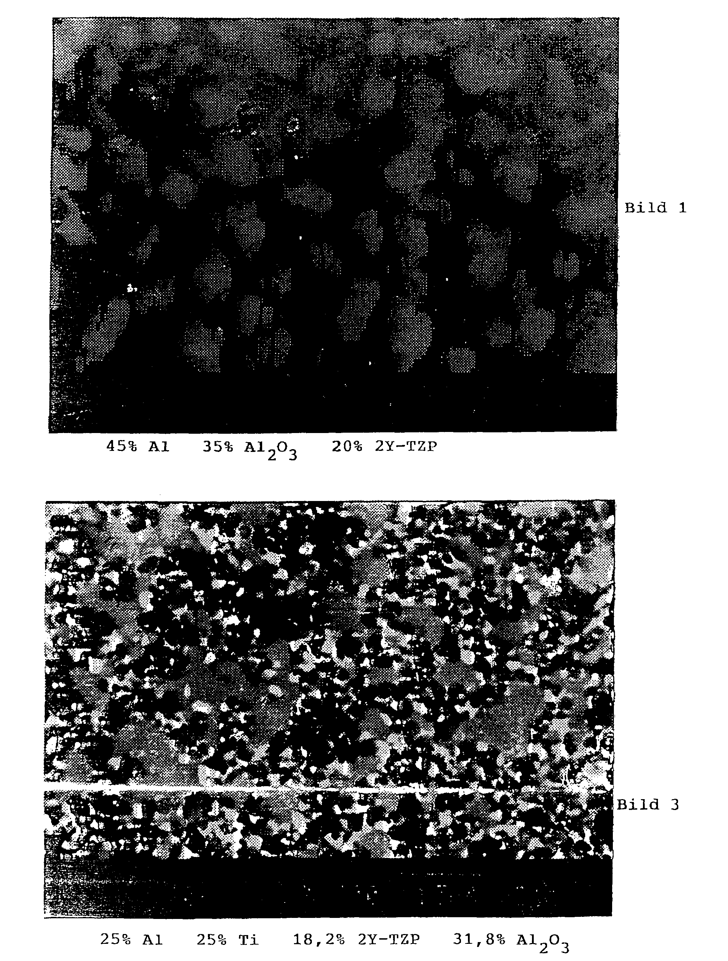

Die Erfindung geht aus von der überraschenden Feststellung, daß ein Grünkörper aus feinstteiligem Aluminium, $ZrO_2$ und $Al_2O_3$ beim raschen Einbringen in einen auf 1550°C vorgeheizten Ofen in Luftatmosphäre gesintert wurde ohne dabei, wie erwartet in kleine Bruchstücke zu zerbersten. Aufgrund der außerordentlich hohen Aufheizgeschwindigkeit von weniger als 1 Sekunde von Raumtemperatur auf die Ofentemperatur, war, wie dies bei konventionellen keramischen Pulverpreßkörpern üblich ist, das Auftreten extremer Wärmespannungen und das Zerplatzen in kleine Bruchstücke erwartet worden. Überraschenderweise wurde der Grünkörper jedoch zu einem völlig rißfreien Formkörper umgewandelt. Die weitere Untersuchung zeigte, daß unter einer dicken dichten $Al_2O_3$ Außenschicht sich Zr-Aluminid und $Al_2O_3$ gebildet hatten. Die Porosität entsprach jedoch noch der des Grünkörpers aufgrund der dichten Außenschicht, die eine Schrumpfung verhinderte. Durch Arbeiten unter Sauerstoffausschluß und der dadurch bedingten geringeren Aufheizgeschwindigkeit von 30°C/min gelang es entsprechende Körper herzustellen, die jedoch dicht geschrumpft vorlagen. Bild 1 der beigefügten Zeichnung zeigt die dabei erhaltene Gefügeausbildung anhand eines Schliffbildes unter Verwendung eines aus 45 Vol.-% Al, 20 Vol.-% 2Y-$ZrO_2$ und 35 Vol.-% $Al_2O_3$ bestehenden Grünkörpers. Die hellen Bereiche in Bild 1 (ca. 1,5 µm groß) bestehen aus der intermetallischen, die dunklen Bereiche aus $\alpha$-$Al_2O_3$. Der elektrische Widerstand dieses Körpers von ca. 1 Ω/cm zeigt, daß die Bereiche der intermetallischen Phase miteinander verbunden sind.

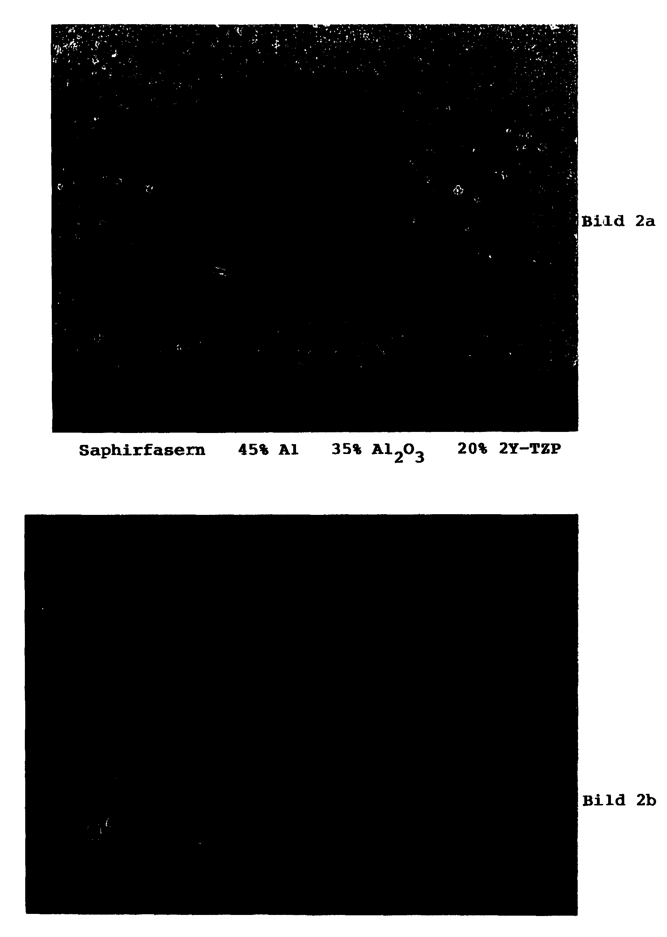

Bild 2a und 2b der Zeichnung zeigen einen Querschnitt durch einen in gleicher Weise hergestellten Formkörper, bei welchem jedoch dem Pulver Saphirfasern (125 µm Durchmesser) zugesetzt wurden. Durch einstündiges Vakuumsintern bei 1550°C wurde der in Bild 2 und 2a gezeigte Faserverbundkörper hergestellt. Die Vergrößerung der Grenzfläche Faser/Matrix verdeutlicht, daß eine perfekte Sinterung um die steife nicht schrumpfende Phase ohne Rißbildung stattgefunden hat.

Voraussetzung für die überraschenden Eigenschaften und die neuartige Struktur des erfindungsgemäß erhältlichen keramischen Formkörpers ist das feinstteilige Vorliegen der Pulverbestandteile des Grünkörpers. Unter feinstteilig wird dabei im Rahmen der Erfindung eine mittlere Teilchengröße unter 1 µm bzw. eine spezifische Oberfläche des Pulvers von mindestens 5 m²/g verstanden. Bevorzugt werden Pulvergemische mit einer spezifischen Oberfläche von 10 bis 40 m²/g. Noch höhere spezifischen Oberflächen sind ebenfalls geeignet, ihre Herstellung ist aber unnötig aufwendig.

Die Zusammensetzung des Grünkörpers wird vorzugsweise so gewählt, daß im fertigen Verbundkörper die intermetallische und gegebenenfalls metallische Phase 15 bis 70 Volumenanteile ausmacht. Der maximal mögliche Anteil z an Aluminidphase ergibt sich aus der Beziehung:

$$xAl + yMO \rightarrow zMAl + aAl_2O_3$$

wobei MO die oxidkeramische Substanz der Menge y ist, die mit der Menge x an Al (meist exotherm) zu einer Menge a an $Al_2O_3$ und dem gewünschten Aluminid MAl reagiert. Dies wird beispielhaft durch folgende Tabelle demonstriert (die Volumenanteile im reaktionsgesinterten Produkt sind in Klammern angegeben).

```
x Al + yMo → zMAl (Vol.%) + aAl₂O₃ (Vol.%)

─────────────────────────────────────────────────────

 5 Al + 3 FeO     →3 FeAl  (67) + 1 Al₂O₃ (33)

 3 Al + 3 FeO     →1 Fe₃Al (55) + 1 Al₂O₃ (45)

 8 Al + 3 Fe₂O₃   →2 Fe₃Al (45) + 3 Al₂O₃ (55)

 4 Al + 1Fe₂O₃    →2 FeAl  (57) + 1 Al₂O₃ (43)

 5 Al + 3 TiO     →3 TiAl  (70) + 1 Al₂O₃ (30)

 7 Al + 3 TiO₂    →3 TiAl  (54) + 2 Al₂O₃ (46)

 3 Al + 3 TiO     →1 Ti₃Al (60) + 1 Al₂O₃ (40)

 5 Al + 3 TiO₂    →1 Ti₃Al (43) + 2 Al₂O₃ (57)

13 Al + 3 TiO₂   →3 TiAl₃ (45) + 2 Al₂O₃ (55)

11 Al + 3 TiO    →3 TiAl₃ (62) + 1 Al₂O₃ (38)

28 Al + 3 Nb₂O₅ → 6 NbAl₃ (64) + 5 Al₂O₃ (36)
```

Wenn der Anteil der keramischen Phase im Endprodukt höher als a sein soll, müssen der Ausgangspulvermischung zusätzlich $Al_2O_3$ und/oder weitere keramische Phasen zugesetzt werden.

Die keramischen Substanzen für das Pulvergemisch werden vorzugsweise aus folgender Gruppe ausgewählt:

$Al_2O_3$, AlN, $Al_4C_3$, $AlB_2$, C, $Cr_2O_3$, $CrB_2$, $Cr_2C_3$, CuO, $Cu_2O$, CoO, $Co_2O_3$, $SiO_2$, $Si_3N_4$, SiC, $Si_xB_y$, $B_4C$, $ZrO_2$, $ZrB_2$, ZrC, ZrN, $HfO_2$, $HfB_2$, HfC, HfN, $Ta_2O_5$, TiO, $TiO_2$, TiN, TiC, $TiB_2$, FeO, $Fe_2O_3$, $Fe_3O_4$, $Fe_2C_3$, $FeB_2$, MgO, MnO, $MoO_3$, $Nb_2O_5$, NiO, CaO, $Y_2O_3$, $V_2O_5$, WC, Mullit, Spinelle, Zirkonate, Ilmenit ($FeTiO_3$), Zirkon ($ZrSiO_4$) oder Titanate sowie Fe-, Ti-, Co-, Ni-, Zr-, Si-, Nb-haltige Erze insbesondere Zikron ($ZrSiO_4$) oder Ilmenit ($FeTiO_3$). Im fertigen Keramikkörper können die gleichen Substanzen die keramische Phase bilden.

Die metallischen Pulver werden, abgesehen vom Aluminium, vorzugsweise ausgewählt aus der Gruppe: Au, Ag, B, Ce, Cu, Ca, Cr, Co, Fe, Ge, Hf, K, U, Mo, Mg, Mn, Ni, Ta, Ti, Zn, Zr, Si, Sb, Sn, Y, Sc, W, V.

Die Kombination der oxidkeramischen Substanzen und gegebenenfalls der metallischen Pulver wird zweckmäßig so gewählt, daß man durch ihre Reaktion eine oder mehrere der folgenden Aluminide erhält: TiAl, $TiAl_3$, $Ti_3Al$, $Ni_3Al$, NiAl, $Fe_3Al$, FeAl, $Zr_3Al$, $Ni_2TiAl$, $Fe_3(Al,Si)$, $NbAl_3$, $Nb_3Al$, $TaAl_3$, $Ta_3Al$, FeCrAl, $Fe_3AlC$, $Co_2TiAl$, FeTiAl, $Ti_2NbAl$, $Ti_5$ $(Al,Si)_3$. Auch TaAl, $Cr_4Al_9$, $Cr_5Al_8$, $Cr_2Al$, $Al_2Zr$, $Al_3Zr$, $Al_3Fe$, $AlNb_2$, $Al_2Ta$, $Al_8Mo_3$, $AlMo_3$, AlMo, AlCo, $Al_3CO$ kommen in Betracht. Eines oder mehrere dieser Aluminide, bevorzugt $Ni_3Al$, kann bzw. können auch als Keimbildner dem Pulver zugesetzt werden.

Das Vermahlen der Pulvermischung für die Herstellung des Grünkörpers erfolgt zweckmäßig in einem flüssigen organischen Medium unter Verwendung einer Kugelmühle oder entsprechender Mahlvorrichtungen. Als Mahlkugeln werden hierbei vorzugsweise solche aus Stahl, WC-Co und $Al_2O_3$, besonders bevorzugt solche aus $ZrO_2$ (Y-TZP) verwendet.

Alternativ ist es jedoch auch möglich, die Pulvermischung trocken in inerter Atmosphäre oder im Vakuum zu vermahlen.

Der Pulvermischung können gegebenenfalls Verstärkungs oder Funktionselemente zugesetzt werden. Diese liegen zweckmäßig in Form von Partikel, Kugeln, Plättchen, Whiskern, Fasern o.dgl. vor. Der Volumenanteil solcher Verstärkungszusätze kann zweckmäßig zwischen 5 und 50 % liegen. Bei größeren oder kleineren Zusätzen lassen sich die Eigenschaften des Grundkörpers nicht mehr im selben Maße erzielen, bzw. wird der angestrebte Verstärkungseffekt gering. Diese Verstärkungsoder Funktionselemente weisen zweckmäßig Durchmesser zwischen 0,5 und 1000 µm auf. Hierbei werden die vorzüglichen mechanischen Eigenschaften des Grundkörpers aufrechterhalten. Die zugesetzten Elemente bestehen zweckmäßig aus Oxiden, Carbiden, Nitriden, Boriden und/oder Siliziden, bevorzugt bestehen sie aus Kohlenstoff, Diamant, SiC, $Al_2O_3$, $Si_3N_4$, TiC, WC oder bzw. und $ZrO_2$. $ZrO_2$ hat sich besonders günstig für die Gefügeentwicklung erwiesen.

Das fertige Probengemisch kann direkt oder nach einer Vorglühung bei 300 bis 500°C zum Grünkörper weiterverarbeitet werden.

Die Herstellung des Grünkörpers erfolgt nach an sich bekannten pulvermetallurgischen Methoden. Geeignet sind alle sogenannten P/M-Verfahren, also einachsiges oder isostatisches Pressen, Spritzgießen, Schlickergießen, Extrudieren o.dgl. Diese Methoden sind dem Fachmann bekannt und bedürfen hier keiner näheren Erläuterung.

Das Sintern des Grünkörpers erfolgt, wie erwähnt, in einer nicht oxidierenden Atmosphäre, d.h. insbesondere unter Ausschluß von Sauerstoff. Bevorzugt wird im Vakuum oder in einer Atmosphäre aus einem oder mehreren der Gase $H_2$, $N_2$, Ar oder He gesintert.

Die bisherigen Versuche haben ergeben, daß bei den meisten in den folgenden Beispielen aufgeführten Zusammensetzungen die Reaktion zwischen Al und den oxidischen Substanzen größtenteils in dem Temperaturbereich 350 bis 660°C, d.h. unterhalb des Schmelzpunkts von Al abläuft. Daher ist es auch oft vorteilhaft, in diesem Bereich etwas langsamer aufzuheizen (1 - 10 K/min). Daß hier nicht eine Fest-flüssig- sondern eine Fest-festreaktion abläuft, war ebenfalls überraschend.

Unter den angegebenen Bedingungen beginnt das Sintern bereits bei 1100°C. Die Temperatur kann jedoch bis 1900°C gesteigert werden. Bevorzugt sind 1350 bis 1600°C.

Die Aufheizgeschwindigkeit kann beim erfindungsgemäßen Verfahren so hoch, als dies technisch durchführbar ist, sein. In der Regel beträgt sie 1 bis 100°C/min, vorzugsweise 10 bis 40°C/min. Unter diesen Bedingungen kann das Sintern noch unter Verwendung üblicher und nicht besonders aufwendiger Apparturen durchgeführt werden.

In Abweichung von dem vorstehend beschriebenen Verfahren kann entsprechend der oben schon erwähnten speziellen Herstellungsweise bei besonders hoher Aufheizgeschwindigkeit auch in einer sauerstoffhaltigen Atmosphäre gesintert werden. Bei dieser Abwandlung des erfindungsgemäßen Verfahrens behandelt man den Grünkörper in einem auf 1300 bis 1600°C vorgeheizten Ofen, z.B. mit Luft oder sauerstoffhaltiger Atmosphäre mit einer Aufheizrate von mehr als 100°C/min, so daß sich eine dicke Oxidschicht bildet, ehe das Innere des Körpers oxidieren kann.

Bei dieser Ausführungsform wird zur Erzielung einer ausreichend hohen Dichte eine heißisostatische Nachverdichtung durchgeführt bei Temperaturen zwischen 1200 und 1600°C und Drucken zwischen 50 und 200 MPa. Eine solche Nachverdichtungsbehandlung kann aber auch bei Formkörpern, die wie beschrieben in nicht oxidierender Atmosphäre gesintert wurden, angewendet werden.

Eine Besonderheit der erfindungsgemäß hergestellten keramischen Formkörper besteht darin, daß ihre intermetallische Phase den üblichen Gefügeverbesserungsbehandlungen der Metallurgie zugänglich ist. Diese Gefügeverbesserungsbehandlungen bestehen im wesentlichen aus einer Wärmebehandlung. Vorzugsweise wird eine solche Wärmebehandlung durchgeführt, indem man den gesinterten Formkörper im Vakuum oder in inerter oder reduzierender Atmosphäre solange bei Temperaturen im Bereich von 1000 bis 1600°C glüht, bis das Gefüge der intermetallischen und gegebenenfalls, soweit vorhanden, metallischen Phase homogen ist und eine Korngröße erreicht hat, die mindestens der Größe des mittleren Durchmessers der intermetallischen Bereiche entspricht. Mit anderen Worten soll die Korngröße soweit vergrößert werden, daß sie mindestens der Größe der miteinander verbundenen Bereiche der intermetallischen Phase, also im Mittel 0,1 bis 10 µm, entspricht.

Die aus der Wissenschaft und Technologie bekannten Legierungsmaßnahmen zur Verbesserung der mechanischen Eigenschaften intermetallischer Verbindungen durch Zugabe der entsprechenden Metalloxide oder Metalle zu den Ausgangsmischungen können auf die hier beschriebenen Verbundwerkstoffe angewendet werden, beispielsweise geringe Mengen an Co (CoO) oder Ni (NiO) zu Intermetcers die $Fe_3Al$ enthalten oder Zugabe von B und N; zu FeAl, oder von B zu $Ni_3Al$.

Gemäß einer weiteren Ausführungsform der Erfindung kann der unter nicht oxidierenden Bedingungen gesinterte Formkörper anschließend in sauerstoffhaltiger Atmosphäre weiter erhitzt werden unter Bildung einer oxidhaltigen, insbesondere aus $Al_2O_3$ bestehenden Schutzschicht. Eine derartige Schutzschicht ist zweckmäßig 1 bis 500 µm dick. Die Dicke der Schutzschicht läßt sich durch die Temperatur und die Dauer der Glühbehandlung in oxidierender Atmosphäre regeln.

Beispielsweise wurde aus einer Pulvermischung, die durch 8-stündiges Attritieren von 57,1 Vol.-% $Al_2O_3$, 24,6 Vol.-% Al, 14,1 Vol.-% NiO und 4,2 Vol.-% Ni in n-Hexan erhalten wurde, ein Grünkörper geformt und 1 Stunde bei 1550°C in Formiergas (Gemisch aus $H_2$ und $N_2$) gesintert. Der erhaltene feinteilige Verbundkörper mit einer Größe der Phasenbereiche von 0,5 bis 2 µm bestand aus 57 Vol.-% $Al_2O_3$ und 43 Vol.-% $Ni_3Al$, wobei die $Ni_3Al$-Korngröße meist die Größe der $Ni_3Al$-Bereiche zwischen den $Al_2O_3$-Bereichen übertraf. Spuren von NiAl wurden röntgenographisch festgestellt. Dies zeigt, daß NiO unter diesen Bedingungen völlig reduziert wurde und $Al_2O_3$ zu einer dichten feinkörnigen (ungefähr 1 µm) Matrix zusammengesintert vorlag. Eine analoge Mischung ohne NiO und Ni ließ sich jedoch nicht verdichten. Die nach der Eindruck-Rißlängemethode (ICL) bestimmte Bruchzähigkeit des $Al_2O_3$/$Ni_3Al$-Verbundwerkstoffs betrug 9,5 MPa √m, was fast dem 3-fachen einer reinen $Al_2O_3$-Matrix entspricht.

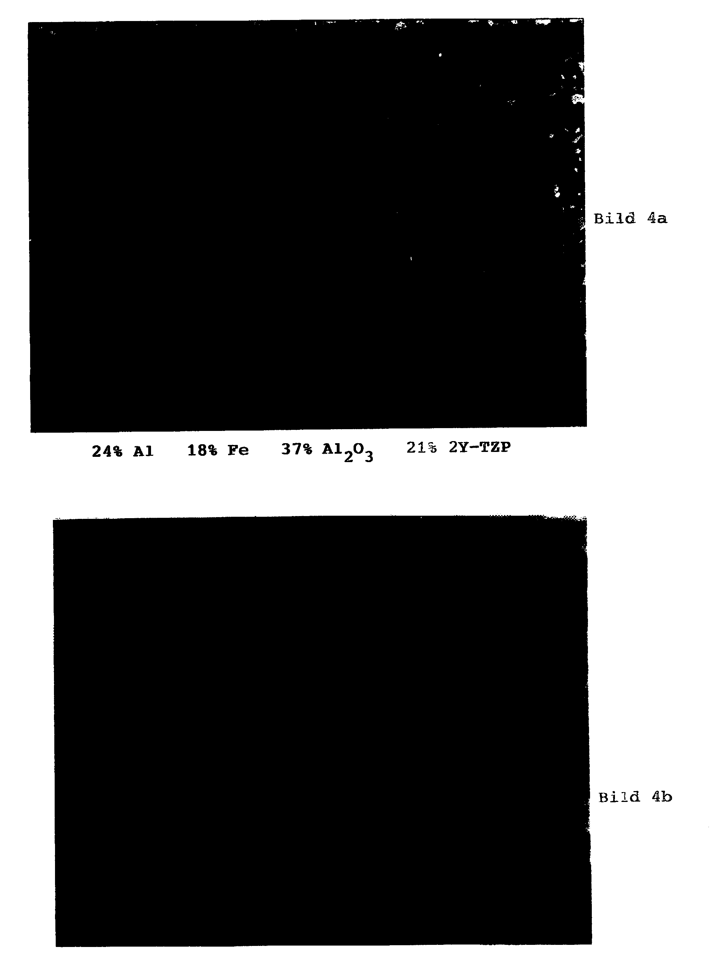

Bild 3 der beigefügten Zeichnung stellt das Gefüge eines in einem weiteren Versuch erfindungsgemäß hergestellten Formkörpers dar. Hierzu wurden 25 Vol.-% Al, 25 Vol.-% Ti, 18,2 Vol.-% $ZrO_2$ und 31,8 Vol.-% $Al_2O_3$ 10 Stunden in Cyclohexan mit 1,5 Gew.-% Stearinsäure in einem Attritor mit 2 mm $ZrO_2$-Kugeln gemahlen und anschließend sprühgetrocknet. Dae trockene Pulver wurde bei 300 MPa isostatisch zu Scheiben mit 50 mm Durchmesser und 10 mm Höhe gepreßt. Die Proben wurden mit 15°C/min in Formiergas auf 1500°C aufgeheizt und dort 2 Stunden gehalten. Wie Bild 3 zeigt, waren die Proben dicht und enthielten als keramische Phase ca. 10 Vol.-% $ZrO_2$ (hell) und 50 Vol.-% $Al_2O_3$ (dunkel), sowie als intermetallische Phasen ca. 40 Vol.-% $Ti_3Al$/TiAl und $Zr_3Al$ (grau). Bild 3 zeigt das zusammenhängende Gerüst der keramischen und der intermetallischen Phasen. Die ICL-Bruchzähigkeit betrug hier 6,8 MPa √m und die Vierpunktbiegefestigkeit (Probenabmessungen 40 x 4 x 4 $mm^3$) 710 MPa ± 11 %.

Auch Bild 4a und b der beigefügten Zeichnung zeigen die beiden interpenetrierenden Netzwerke der keramischen (dunkel) und intermetallischen Phasen, in denen das Gefüge eines Verbundwerkstoffkörpers aus $Al_2O_3$/$ZrO_2$ und einem Gemisch aus den Aluminiden $Fe_xAl_y$ und $Zr_yAl_y$ dargestellt ist. Die Ausgangspulvermischung bestand aus 24 Vol.-% Al, 18 Vol.-% Fe, 37 Vol.-% $Al_2$ und 21 Vol.-% $ZrO_2$. Der daraus hergestellte Preßkörper wurde eine Stunde bei 1550°C in Argon gesintert bei einer Aufheizrate von 30°C/min. Die Biegefestigkeit betrug 490 MPa und die ICL-Bruchzähigkeit 11,5 MPa √m. Proben derselben Zusammensetzung, die in einem Dilatometer im Vakuum gesintert wurden, zeigten einen Schrumpfungsbeginn bei 1180°C, wobei schon 10 Minuten nach Erreichen der maximalen Sintertemperatur von 1550°C kaum noch eine weitere Schrumpfung auftrat. Die schnelle und vollständige Sinterung ist teils auf die Feinheit der $Al_2O_3$-Kristallite, die bei der Redox-Reaktion entstehen und eventuell zum Teil auf die Wirkung einer transienten Al-haltigen flüssigen Phase zurückzuführen.

Durch die Erfindung wird eine ganze Reihe von vorteilhaften Merkmalen, sowohl was die Verfahrensseite als auch was die Eigenschaften der hergestellten Formkörper anbetrifft, erzielt. Insbesondere lassen sich die nachstehenden Vorteile gegenüber dem Stand der Technik erzielen:

1. Infolge der in situ Reduktion billiger Oxide (wie $TiO_2$, $Fe_2O_3$, $Nb_2O_5$, $ZrO_2$, etc.) und sogar Erze (wie Ilmenit) bei relativ niedrigen Temperaturen ist das erfindungsgemäße Verfahren leicht durchführbar und mit sehr geringen Kosten verbunden.

2. Die schnellen Aufheizraten (so schnell wie ofentechnisch möglich, d.h. bis zu 100°C/min) und kurzen Sinterzeiten lassen eine schnelle Fertigung von "Imtermetcer"-Komponenten zu.

3. Eine vollständige Verdichtung, zumindest über Heißisostatpressen ist schon bei Temperaturen < 1350°C möglich. Dies bedeutet, daß erfindungsgemäß mit "Intermetcer"-Schlicker infiltrierte Faserverbundkörper bei vielen Fasertypen ($Al_2O_3$, SiC, etc.) ohne Faserschädigung verdichtet werden können. Bei einigen Zusammensetzungen ist sogar eine drucklose Verdichtung durch Sintern bei nur 1300°C in kürzester Zeit (1 min) möglich.

4. Alle Probleme, die bei der pulvermetallurgischen Herstellung von Aluminiden auftreten (Schutzgasmahlung, $O_2$-Aufnahme, Grenzflächenverunreinigungen, etc.) treten bei der erfindungsgemäßen Herstellung von "Intermetcers" nicht auf. Zusätzliche Sinterhilfen sind nicht nötig.

5. Aufgrund des hohen Anteils an keramischen Phasen, insbesondere von $Al_2O_3$ und gegebenenfalls Verstärkungselementen sind die typischen Eigenschaften des erfindungsgemäß erhältlichen "Intermetcer"-Körpers "keramisch", d.h. hochtemperaturfest, oxidationsbeständig, hart und verschleißfest. Trotzdem ist die Bruchzähigkeit und zum Teil auch die Bruchfestigkeit wesentlich besser als die von monolithischen Keramiken, wie z.B. $Al_2O_3$ ($\sim$3,5MPa $\sqrt{m}$, $\sim$400 MPa).

6. Die zusammenhängende intermetallische Phase bewirkt eine gute Wärmeleitfähigkeit, was eine gute Thermoschockfestigkeit zur Folge hat. Außerdem sind die Körper elektrisch leitend, so daß eine Funkenerosionsbearbeitung und eine induktive Aufheizung möglich sind.

7. Die Korngrenzen der keramischen Matrix, insbesondere der $Al_2O_3$-Matrix, die bei dem erfindungsgemäßen Verfahren entstehen, sind sehr rein, d.h. $SiO_2$-Anteile (Verunreinigungen) werden vom Al reduziert, wobei das Si im Aluminid eingebaut wird. Daraus resultiert eine gute Kriechfestigkeit.

8. Die erfindungsgemäß erhältlichen "Intermetcers" lassen sich mit einem anderen bekannten Verfahren, wenn überhaupt, nicht in gleicher Qualität herstellen. Eine Druckinfiltration geschmolzener Aluminide (Schmelzpunkte bis über 2000°C!) in poröse Vorkörper wäre zwar technisch vorstellbar, jedoch mit einem wirtschaftlich nicht vertretbaren hohen technischen Aufwand verbunden. Eine Herstellung nach pulvermetallurgischen Verfahren könnte allenfalls nur in Verbindung mit einer heißen Nachverdichtung zu ähnlichen Produkten führen, die aber kaum die gleichen vorteilhaften Eigenschaften aufweisen würden.

9. Durch Variation der Zusammensetzungskomponenten lassen sich Formkörper herstellen, deren elektrischer Widerstand zwischen 0,1 und $10^3$ $\Omega$ cm einstellbar ist.

10. Infolge der Gefügefeinheit ($< 1$ $\mu$m) kurzzeitig gemäß Erfindung gesinterter "Intermetcer", insbesondere, was die Korngrößer der $Al_2O_3$-Matrix angeht, lassen sich entsprechende Vorkörper superplastisch umformen.

11. Formkörper, die bisher durch Schmelzoxidation (Lanxide™) und $C^4$-Verfahren hergestellt werden, können in größerer Variationsbreite und mit besseren mechanischen Eigenschaften durch das erfindungsgemäße Verfahren hergestellt werden.

12. Aufgrund der guten Oxidationsbeständigkeit und Hochtemperaturfestigkeit von Aluminiden weisen auch die erfindungsgemäß erhältlichen "Intermetcers" entsprechend gute Hochtemperatureigenschaften auf.

13. Da vorzugsweise die Aluminidphase eine Korngröße aufweist, die größer ist als die Abmessungen zwischen den keramischen Bereichen, verhalten sich die rißüberbrückenden Aluminidligamente mechanisch wie Einkristalle, d.h. die typische Korngrenzenschwäche der Aluminide kann sich nicht auswirken. Die Ligamente sind damit duktil und weisen auch bei hohen Temperaturen eine hohe Streckgrenze auf (dazu u.a. "Metcers" - A Strong Variant of Cermets", CFI/Ber. DKG 71 (1994) 301).

14. Alle bekannten Legierungszusätze zur Verbesserung der mechanischen Eigenschaften und alle dazu beschriebenen Wärmebehandlungen lassen sich problemlos auf die Gefügekontrolle der erfindungsgemäß erhaltenen "Intermetcers" übertragen.

15. Die erfindungsgemäß erhältlichen "Intermetcers" stellen eine ideale Matrix für Plättchen- und Faserverbundwerkstoffe, aber auch für andere harte (z.B. Diamant) oder Funktionsphasen dar.

16. Die Möglichkeit zur Erzeugung einer durchgehenden $Al_2O_3$-Schutzschicht auf den "Intermetcers" bringt sowohl für Hochtemperatur- als auch Friktionsanwendungen große Vorteile.

17. Erfindungsgemäß hergestellte "Intermetcers"-Verbundkörper mit sehr harten Komponenten (Diamanten, SiC, TiC, WC, etc.) sind als Schneidwerkzeuge zur Bearbeitung von metallischen, auch keramischen oder sogar hölzernen (oder polymeren) Teilen brauchbar.

18. Ein schichtweiser Aufbau der "Intermetcers", bestehend aus Schichten unterschiedlicher Zusammensetzung oder unterschiedlichem Volumenanteil an keramischer Phase ermöglicht die Herstellung von Funktionsgradienten.

19. Die durchgehende intermetallische Phase der erhaltenen Formkörper ermöglicht es, daß Löt- und Verschweißverfahren zur Verbundherstellung mit metallischen Komponenten (Joining) ohne Metallisierungsschicht mit geringstem Aufwand durchzuführen sind, beispielsweise durch Reibschweißen.

20. Das geringe spezifische Gewicht der erfindungsgemäß erhaltenen "Intermetcers" (im Bereich zwischen 4 und 5 $g/cm^3$) macht entsprechende Komponenten, besonders in Form bewegter Teile, technisch interessant.

21. Ein weiterer Vorteil besteht in der Möglichkeit, billige Erze, z.B. Ilmenit, Hämatit, Magnetit, Zirkon, Chromit. etc. als Ausgangssubstanz für die Reaktion mit Al zu verwenden. In vielen Fällen werden die in den Erzen enthaltenen Verunreinigungen entweder im $Al_2O_3$-Gitter (z.B. $Cr_2O_3$) gelöst oder in den entstehenden Aluminiden eingebaut. Auch wenn die Verunreinigungen als disperse Teilchen im $Al_2O_3$ oder in den Aluminiden u.a. auch als weitere Reaktionsprodukte (z.B. Silizide) verteilt sind, kann der Verbundkörper vorteilhafte Eigenschaften besitzen, besonders wenn diese auf die äußerst geringen Herstellungskosten bezogen werden.

Alle metallkundlichen Maßnahmen, die durch unzählige Veröffentlichungen zur Verbesserung des mechanischen Verhaltens von Aluminiden bekannt sind, können auf die erfindungsgemäß erhältlichen "Intermetcers" angewendet werden. Dies betrifft insbesondere die Zulegierung von Elementen wie Nb, Cr, Zr, V und Mo zu Titanaluminiden. Damit eröffnet die Erfindung den Weg zu einer neuen Klasse von Verbundwerkstoffen, für die ein breiter Anwendungsspielraum vorhanden ist. Dies betrifft besonders auch Intermetcers als Matrix für Faserverbundwerkstoffe, die als fehlertolerante, verschleiß- und hochtemperaturfeste, oxidationsbeständige Komponenten, beispielsweise als Friktionselemente in Hochleistungsbremsen, Anwendung finden können. Auch bewegte Teile im Hochtemperaturbereich von Motoren und Turbinen können aufgrund des geringen spezifischen Gewichts aus "Intermetcer" Werkstoffen hergestellt werden. Feste Funktionswerkstoffe mit genau einstellbaren elektrischem Widerstand, der zwischen dem der Metalle ($10^{-16}$) und dem der Keramiken ($10^{10}$ $\Omega cm$), bevorzugt zwischen 0,1 und 1000 $\Omega$ cm, liegt, sind gemäß Erfindung erhältlich. Eine besondere Ausführungsform läßt sich durch einen schichtweisen Intermetcer-Aufbau erhalten, bei dem der Anteil der intermetallischen Phase von einer Seite zur anderen (in Richtung senkrecht auf die Schichtebenen) zunimmt, was mit einer entsprechenden Eigenschaftsvariation verbunden ist.

Mit dem erfindungsgemäßen Verfahren wird ein neuartiges Hochleistungsmaterial zur Verfügung gestellt, das nach einfachen pulvermetallurgischen Methoden aus sehr billigen Rohstoffen erhältlich ist. Es ist vielseitig anwendbar und mit großer Eigenschaftsvariationsbreite zu erzeugen.

Die folgenden Beispiele erläutern die Erfindung weiter.

Zu allen Beispielen muß beachtet werden, daß während des Attritormahlens 10 bis 40 Gew.-% des Al durch Oxidation zu amorphem $Al_2O_3$ und Gamma-artigen $Al_2O_3$-Phasen umgewandelt wird. Diese Mahleffekte sind ausführlich in "Effect of Processing Parameters on Phase and Microstructure Evolution in RBAO Ceramics" J.Am. Ceram. Soc. 77 (1994) 2509 beschrieben. Dieser oxidierende Al-Anteil läßt sich exakt bestimmen, so daß dies bei gewünschten Intermetcer-Zusammensetzungen berücksichtigt werden kann.

## Beispiel 1

100 g eines Pulvers aus 45 Vol.-% Al Pulver (Alcan 105, 20-50 µm Durchmesser, Alcan, Montreal/Kanada), 35 Vol.-% $Al_2O_3$ (MPA 4, Ceralox Condea Chemie, Brunsbüttel, 0,3 µm Durchmesser), 20 Vol.-% $ZrO_2$ (TZ-2Y, Tosoh, Japan, < 1 µm Durchmesser) wurde 7 Stunden in einer Attritormühle mit 3 mm TZP-Mahlkugeln in Aceton gemahlen. Die mittlere Pulverteilchengröße wurde dadurch auf 1 µm reduziert. Danach wurde die Mischung getrocknet und anschließend isostatisch zu Platten mit den Abmessungen 40 x 40 x 8 $mm^3$ unter einem Druck von 300 bis 900 MPa gepreßt. Anschließend wurden die Proben in Vakuum mit 30 K/min auf 1550°C aufgeheizt und 1 Stunde auf dieser Temperatur gehalten.

Alle Proben wiesen danach eine Dichte von über 95 % TD (theoretische Dichte) auf, wobei z. T. noch feine Poren mit Durchmessern < 1 µm vorhanden waren. Die Körper bestanden aus einer Aluminidmischung $Al_2Zr/Al_3Zr$ mit feinen (Durchmesser < 5 µm) Bereichen, die im wesentlichen zusammenhängend in eine keramische Matrix aus ca. 70 Vol.-% $Al_2O_3$ und $ZrO_2$ eingelagert waren. Die Schrumpfung (lineare Differenz zwischen der Abmessung des Grün- und Sinterkörpers) betrug bei einem isostatischen Preßdruck von 900 MPa 9 % und bei 300 MPa 12 %. Die mittlere 4-Punkt-Biegefestigkeit betrug 470 MPa und die Rißlängebruchzähigkeit (ICL) 6,8 MPa $m^{1/2}$.

## Beispiel 2

Wie im Beispiel 1 wurde eine Mischung aus 24 Vol.-% Al, 18 Vol.-% Fe (Aldrich, Steinheim, <10 μm Durchmesser), 37 Vol.-% $Al_2O_3$ und 21 Vol.-% $ZrO_2$, 7 Stunden lang attritiert, getrocknet und bei 900 MPa isogepreßt. Anschließend wurden die Proben in Vakuum mit 30 K/min auf 1550°C aufgeheizt und 1 Stunde auf dieser Temperatur gehalten. Die Schrumpfung betrug danach 11.2 % bei einer Enddichte von über 95 % TD. Der Sinterkörper bestand aus ca. 20 Vol.-% aus AlFe und $Fe_3Al$ und 80 Vol.-% $Al_2O_3$ + $ZrO_2$.

## Beispiel 3

Wie im Beispiel 1 beschrieben, nur in Isopropanol statt Aceton, wurde eine Mischung aus 40 Vol.-% Al, 10 Vol.-% Nb (Starck, Goslar, < 10 μm Durchmesser), 30 Vol.-% $Al_2O_3$ und 20 Vol.-% $ZrO_2$ attritiert, getrocknet und bei 300 MPa isostatisch gepreßt. Anschließend wurden die Proben in Vakuum mit 15 K/min auf 1550°C aufgeheizt und 1 Stunde auf dieser Temperatur gehalten. Die Schrumpfung betrug danach 10.5 % bei einer Enddichte von über 94 % TD. Der Sinterkörper bestand aus ca. 20 Vol.-% $AlNb_2$ mit Spuren aus $AlNb_3$ und ca. 80 Vol.-% $Al_2O_3$ + $ZrO_2$. Die ICL-Bruchzähigkeit betrug 5,9 MPa $m^{1/2}$.

## Beispiel 4

Wie im Beispiel 1 beschrieben wurde eine Mischung aus 55 Vol.-% Al, 25 Vol.-% $Al_2O_3$ und 20 Vol.-% $ZrO_2$ attritiert, getrocknet und 10 min bei 500°C im Vakuum wärmebehandelt. Bei einem isostatischen Preßdruck von 400 MPa wurde eine Gründichte von 56.4 % TD erzielt. Anschließend wurden die Proben in Formiergas mit 25 K/min auf 1500°C aufgeheizt und 2 h auf dieser Temperatur gehalten. Der Sinterkörper hatte eine Dichte von > 95 % TD und bestand danach aus ca. 25 Vol.-% $Al_3Zr$ + $Al_2Zr$ und 75 Vol.-% $Al_2O_3$ + $ZrO_2$. Die ICL-Bruchzähigkeit betrug 6,2 MPa $m^{1/2}$. Nach einer 10 minütigen heißisostatischen Nachverdichtung bei einen Ar-Druck von 180 MPa und eine Temperatur von 1450°C waren die Proben nahezu völlig dicht; die ICL-Bruchzähigkeit war auf 7,6 MPa $m^{1/2}$ angestiegen.

## Beispiel 5

Wie im Beispiel 1 beschrieben wurde eine Mischung aus 45 Vol.-% Al, 20 Vol.-% TiO, (Riedel-de Haën, Seelze, < 100 μm Durchmesser), 15 Vol.-% $Al_2O_3$ und 20 Vol.-% $ZrO_2$ attritiert, getrocknet und 10 min bei 500°C im Argon wärmebehandelt. Anschließend wurde die Pulvermischung bei 900 MPa isogepreßt. Die entsprechenden Körper hatten nach einer Sinterung in Formiergas bei 1450°C, 2 h eine Dichte von ca. 95 % TD bei einer Schrumpfung von 9,2 %. Der so erhaltene Sinterkörper bestand aus dem Aluminid $AlTi_3$ und $Al_2O_3$ mit feinverteiltem $ZrO_2$. Spuren von $TiO_2$ konnten ebenfalls nachgewiesen werden.

## Beispiel 6

200 g einer Mischung aus 45 Vol.-% Al, 35 Vol.-% $Al_2O_3$ und 20 Vol.-% $TiO_2$ wurde in Cyclohexan mit 1,7 Gew.-% Stearinsäure 10 h attritiert und sprühgetrocknet. Nach isostatischer Pressung bei 700 MPa und 1 h-igen Sinterung in Vakuum bei 1500°C wurden Körper mit einer Dichte von ca. 94 % TD bei einer Schrumpfung von 13,5 % erhalten. Der Sinterkörper bestand aus ca. 35 Vol.-% überwiegend $AlTi_3$ und ca. 65 Vol.-% $Al_2O_3$. Nach einer HIP-Nachverdichtung (10 min, 180 MPa Ar-Druck) waren die Proben 100% dicht und wiesen eine ICL-Bruchzähigkeit von 8,2 MPa $m^{1/2}$ auf.

## Beispiel 7

Wie im Beispiel 6 beschrieben wurde eine Mischung aus 20 Vol.-% Al, 21 Vol.-% Ti (Aldrich, Steinheim, <100 μm Durchmesser), 17 Vol.-% $Al_2O_3$ und 42 Vol.-% $ZrO_2$ attritiert, getrocknet und wie in Beispiel 4 wärmebehandelt. Nach einem isostatischen Preßdruck von 300 MPa und einer Sinterung in Vakuum bei 1550°C betrug die Enddichte des Sinterkörpers ca. 96 % TD bei einer Schrumpfung von 15 %. Der Körper bestand danach aus > 20 Vol.-% einer $AlTi_3$/ AlTi-Legierung, eingebettet in einer $Al_2O_3$-Matrix mit Anteilen aus $ZrO_2$. Röntgenographisch ließen sich noch Spuren von Ti und anderen Phasen festellen, die noch nicht identifiziert werden konnten.

## Beispiel 8

Wie im Beispiel 1 beschrieben wurde eine Mischung aus 34 Vol.-% Al, 36 Vol.-% Ti und 30 Vol.-% $Al_2O_3$ attritiert, bei 900 MPa isogepreßt und gesintert. Bei einer Schrumpfung von 10,3 % und einer Sinterdichte von > 94 % TD bestand der Körper aus ca. 60 Vol.-% $Al_2O_3$-Matrix mit einer feinverteilten zusammenhängenden Legierung aus $AlTi_3$/ $AlTi$. Die ICL-Bruchzähigkeit betrug 6,9 MPa $m^{1/2}$. Nach einer 20 minütigen HIP-Nachverdichtung bei 200 MPa Ar-Druck stieg sie auf 7,5 MPa $m^{1/2}$.

Beispiel 9

Wie im Beispiel 2 beschrieben wurde eine Mischung aus 50 Vol.-% Al, 20 Vol.-% $Nb_2O_5$ (Johnson Matthey, Karlsruhe, 10-20 µm Durchmesser) und 30 Vol.-% $Al_2O_3$ attritiert, isogepreßt und gesintert. Die Proben erreichten ca. 96 % TD bei einer Schrumpfung von 12,3 % . Die Sinterkörper bestanden aus ca. 30 Vol.-% $AlNb_2$/$AlNb_3$ sowie ca. 70 Vol.-% $Al_2O_3$.

Beispiel 10

Wie im Beispiel 2 beschrieben wurde eine Mischung aus 60 Vol.-% Al, 20 Vol.-% TiO (Aldrich, Steinheim, < 40 mesh) und 20 Vol.-% $Al_2O_3$ attritiert, isogepreßt und bei 1600°C 2 h in Formiergas gesintert. Die Proben waren nahezu völlig dicht und bestanden aus ca. 40 Vol.-% $AlTi_3$ mit einem geringen Anteil AlTi sowie ca. 60 Vol.-% $Al_2O_3$ . Die ICL-Bruchzähigkeit betrug 7,1 MPa $m^{1/2}$ und die 4-Punkt-Biegebruchfestigkeit 640 MPa.

Beispiel 11

Wie im Beispiel 1 beschrieben wurde eine Mischung aus 50 Vol.-% Al, 20 Vol.-% NiO (Aldrich, Steinheim 10-20 µm Durchmesser) und 30 Vol.-% $Al_2O_3$ attritiert, isogepreßt und gesintert. Danach wurden die Proben über 95 % TD dicht und bestanden überwiegend aus dem Aluminid $AlNi_3$ und ca. 65 Vol.-% $Al_2O_3$.

Beispiel 12

Wie im Beispiel 2 beschrieben wurde eine Mischung aus 33 Vol.-% Al, 10 Vol.-% Ni (Ventra, Karlsruhe, 1 µm Durchmesser), 1 Vol.-% Mg und 56 Vol.-% $Al_2O_3$ attritiert, gepreßt und gesintert. Die fast porenfreien Proben enthielten danach ca. 30 Vol.-% $AlNi$/$AlNi_3$ und ca. 70 Vol.-% $Al_2O_3$ . Die ICL-Bruchzähigkeit betrug 7,5 MPa $m^{1/2}$.

Beispiel 13

Wie im Beispiel 1 beschrieben wurde eine Mischung aus 45 Vol.-% Al und 35 Vol.-% $Al_2O_3$ und 20 Vol.-% der Phase X gemischt, isogepreßt und gesintert. Danach wurden folgende Phasen röntgenographisch nachgewiesen:

| 20 Vol.-% X | Hauptmatrix | Aluminidphasen | Sonstige Phasen |
|---|---|---|---|
| $Ta_2O_5$  (1) | $Al_2O_3$ | $AlTa_2$ | Ta |
| $V_2O_5$  (2) | $Al_2O_3$ | $AlV_2$ | Al |
| 10 Vol.-% $ZrO_2$ und 10 Vol.-% Ta  (3) | $Al_2O_3$ | $AlTa_2$, $Al_3Zr$ | $ZrO_2$ |
| $MoO_3$  (4) | $Al_2O_3$ | $Al_4Mo_3$ | Mo, Al |
| $HfO_2$  (5) | $Al_2O_3$ | $Al_3Hf$ | Hf |

(1) Aldrich, Steinheim, < 5 μm Durchmesser
(2) Aldrich, Steinheim, < 10 μm Durchmesser
(3) Johnson Matthey, Karlsruhe, < 325 mesh Durchmesser
(4) Aldrich, Steinheim, 10-20 μm Durchmesser
(5) Aldrich, Steinheim, < 1 μm Durchmesser

## Beispiel 14

Wie im Beispiel 6 wurde eine Mischung aus 45 Vol.-% Al, 20 Vol.-% $MoO_3$ und 35 Vol.-% $ZrO_2$ attritiert, gepreßt und gesintert. Die Proben bestanden danach aus ca. 75 Vol.-% $Al_2O_3$ + $ZrO_2$ und 25 Vol.-% einer Aluminidmischung aus $Al_3Zr$, $Al_8Mo_3$ und nicht identifizierbaren Phasen.

## Beispiel 15

Wie im Beispiel 1 beschrieben wurde eine Mischung aus 5 Vol.-% Al, 30 Vol.-% Fe, 20 Vol.-% $ZrO_2$ und 45 Vol.-% $Al_2O_3$ attritiert, uniaxialgepreßt und gesintert. Die dichten Proben bestanden danach aus ca. 55 Vol.-% $Al_2O_3$, 15 Vol.-% $ZrO_2$ sowie aus AlFe und $Al_2Zr$.

## Beispiel 16

Wie im Beispiel 1 beschrieben wurde eine Mischung 24 Vol.-% Al, 18 Vol.-% Fe, 58 Vol.-% $Al_2O_3$ attritiert, gepreßt und gesintert. Die Proben bestanden danach aus ca. 60 Vol.-% $Al_2O_3$ und 40 Vol.-% AlFe/$Fe_3Al$. Die ICL-Bruchzähigkeit betrug 11,5 MPa m$^{1/2}$ und die 4-Punktbiegfestigkeit 510 MPa bei einer Schrumpfung von weniger als 15 %.

## Beispiel 17

Wie im Beispiel 1 beschrieben wurde eine Mischung aus 50 Vol.-% Al und 50 Vol.-% $ZrO_2$ attritiert, gepreßt und gesintert. Die Dichte betrug ca. 96 % TD bei einer Schrumpfung von 12 %. Die Sinterkörper bestand aus ca. 30 Vol.-% $Al_2Zr$ sowie $ZrO_2$ und $Al_2O_3$ als Matrix. Weitere intermetallischen Phasen mit ca. 10 Vol.-% Anteil konnten nicht eindeutig identifiziert werden.

## Beispiel 18

Das Material aus Beispiel 1 wurde als Matrix für 20 Vol.% 10 μm große Diamantpartikel (De Beers, Johannesburg Südafrika) verwendet. Diese Partikel wurden nach dem Attriervorgang wie in Beispiel 1 beschrieben 10 min im Attritor zugemischt. Danach wurde die Verbundmischung im Rotovap-Trockner getrocknet und bei 600 MPa zu Zylindern 10 mm im Durchmesser und 10 mm hoch isogepreßt. Diese wurden mit 30 K/min in Vakuum auf 1400°C aufgeheizt und 30 min gehalten. Danach wurden die Proben gasdicht (ca. 94 % TD) so daß sie bei 1400°C mit einem Ar-Druck von 200 MPa 15 min HIP-nachverdichtet werden konnten. Danach wurde die Verbundprobe dicht und die Diamantpartikel waren scheinbar ohne Reaktion im Material wie im Beispiel 1 beschrieben homogen eingebaut.

Beispiel 19

In das Material von Beispiel 5 wurden ca. 10 Vol.-% Mullitfasern (Sumitomo Chem., Altex 2K) dadurch eingelagert, daß ein Schlicker attritiert nach Beispiel 6 in eine Form 30 x 30 x 10 mm$^3$ um die ausgerichteten Fasern gegossen und anschließend getrocknet wurde. Die quadratischen Platten wurden danach isostatisch mit 200 MPa nachverdichtet. Anschließend wurde wie in Beispiel 18 verfahren. Das Gefüge entsprach danach dem des Materials aus Beispiel 5, wobei die Mullitfasern noch erhalten, d.h. vom Al nicht angegriffen wurden.

Beispiel 20

100 g einer Mischung aus 50 Vol.-% Al, 10 Vol.-% $SiO_2$ (Aldrich, Steinheim, < 325 mesh Durchmesser), 15 Vol.-% $TiO_2$ und 5 Vol.-% $ZrO_2$ und 20 Vol.-% $Al_2O_3$ wurde 4 h in n-Hexan mit 2 mm Stahl-Kugeln in einem Behälter mit UHMWPE-Auskleidung attritiert. Die im Rotovap-Gerät getrocknete Pulvermischung wurde mit 300 MPa isogepreßt und anschließend 1 h bei 1550°C in Vakuum gesintert. Die fast dichten Proben bestanden danach aus ca. 70 Vol.-% $Al_2O_3$ (+$ZrO_2$) und ca. 30 Vol.-% aus $Ti_5(Al,Si)_3$ sowie anderen noch nicht identifizierbaren Phasen.

Beispiel 21

Alle Proben aus Beispielen 1 bis 17 wurden 6 h bei 1350°C an Luft geglüht. Alle wiesen danach eine ca. 100 $\mu$m dicke hauptsächlich aus $Al_2O_3$ bestehende dichte Schicht auf.

Beispiel 22

Eine 100 g Mischung aus 40 Vol.-% feinem Al-Pulver (Inst. für Materialforschung, Riga, Lettland, ca. 1 $\mu$m Durchmesser) und 30 Vol.-% $ZrO_2$ und 30 Vol.-% $Al_2O_3$ wurde trocken in einer 1000 cm$^3$ PVC-Flasche mit 5 mm $Al_2O_3$-Mahlkugeln 24 h gemischt. Das Pulver wurde mit 900 MPa zu Zylindern 1 mm im Durchmesser und 1 mm hoch isogepreßt und anschließend 1 h bei 1550°C in Vakuum gesintert. Die Proben waren danach ca. 94 % TD dicht und bestanden aus ca. 80 Vol.-% $Al_2O_3$ (+ $ZrO_2$) und ca. 20 Vol.-% $Al_3Zr$.

Beispiel 23

Der Mischung aus Beispiel 1 wurde zusätzlich 5 Vol.-% feinster Ruß (C) (Goodfellow, Bad Nauheim < 2 $\mu$m) zugemischt; sonst wurde so wie im Beispiel 1 (900 MPa isogepreßt) verfahren. Das Gefüge war wie das von Beispiel 1, nur wurden Spuren von feinverteiltem im Aluminid vorliegenden $Al_4C_3$ gefunden.

Beispiel 24

Wie im Beispiel 1 beschrieben wurde eine Mischung aus 45 Vol.-% Al, 20 Vol.-% NiO, 5 Vol.-% $Ni_{79}Al_{21}$, (Goodfellow, Bad Nauheim, < 150 $\mu$m), 20 Vol.-% $Al_2O_3$ und 10 Vol.-% monoklines $ZrO_2$ (Dynamit Nobel AG, Hamburg, Dynazirkon F 0,7 $\mu$m Durchmesser) attritiert, getrocknet und mit 900 MPa isogepreßt und gesintert. Das Gefüge bestand zu 65 Vol.-% aus $Al_2O_3$ und dominant $Ni_3Al$ sowie nicht identifizierbaren Zr-haltigen Phasen.

Beispiel 25

Dem Material aus Beispiel 1 wurden wie in Beispiel 18 beschrieben 10 Vol.-% SiC-Platelets (Alcan, C-Axis, Canada, ca. 12 $\mu$m im Durchmesser) und 10 Vol.-% $TiB_2$ (H. C. Starck, Goslar, ca. 10 $\mu$m Durchmesser) zugemischt. Die getrocknete Pulvermischung wurde bei 600 MPa isogepreßt und in Ar bei 1550°C 2h gesintert. Danach waren die $TiB_2$-Partikel homogen im Intermetcer-Material verteilt. Um diese Partikel waren keine Mikrorisse zu entdecken. Die SiC-Platelets hatten sich teilweise aufgelöst.

Beispiel 26

In das Material von Beispiel 12 wurde wie in Beispiel 25 beschrieben 30 Vol.-% WC (H.C. Starck, Goslar, 1,5 $\mu$m Durchmesser) zugemischt und wie in Beispiel 25 nur in $H_2$ gesintert. Das gesinterte ca. 95 % TD Material enthielt feine ( < 2 $\mu$m) Poren und wies eine ICL-Bruchzähigkeit von 8.3 MPa m$^{1/2}$ auf.

Beispiel 27

Wie im Beispiel 1 beschrieben wurde eine Pulvermischung aus Al, $Al_2O_3$ und $ZrO_2$ 7 Stunden lang attritiert und getrocknet. Anschließend wurde das Pulver in Al-Bolzen gegeben (Außen-/Innendurchmesser: 48 bzw. 30 mm, Länge 100 mm, einseitig geschlossen) und auf einem Rütteltisch vorverdichtet. Die Bolzen wurden anschließend mit einem Arbeitsdruck von 2 GPa stranggepreßt. Nach dem Strangpressen wurde die Bolzenhülle entfernt. Die so hergestellten Proben wiesen eine Dichte von > 92 % TD auf. Im weiteren wurden die Proben in Vakuum mit 30 K/min auf 1550°C aufgeheizt und 1 Stunde auf dieser Temperatur gehalten.

Diese Proben wiesen danach eine Dichte von > 97 % TD auf; die Schrumpfung betrug ungefähr 2 %. Die Körper bestanden aus einer Aluminidmischung $Al_2Zr/Al_3Zr$ und aus $Al_2O_3/ZrO_2$ als keramische Phase. Die Gefüge zeigten zusammenhängende Netzwerke aus intermetallischen und keramischen Phasen.

Beispiel 28

Wie im Beispiel 27 erfolgte die Formgebung über Strangpressen. Anstelle einer Verdichtung bei Raumtemperatur und hohem Druck wurde jedoch die Verdichtung bei 450°C mit einem Druck von ungefähr 700 MPa durchgeführt. Die Proben waren danach nahezu vollständig verdichtet. Anschließend wurden die Proben wie im Beispiel 27 wärmebehandelt. Es bildete sich ebenfalls ein Verbund aus $Al/Al_2Zr/Al_3Zr$ als metallische und $Al_2O_3/ZrO_2$ als keramische Phase. Eine merkliche Schrumpfung konnte nicht festgestellt werden.

Beispiel 29

Wie im Beispiel 1 wurde eine Mischung aus 45 Vol.-% Al, 20 Vol.-% Ilmenit ($FeTiO_3$ Australian Consolidated Rutile Pty, < 100 µm Durchmesser) und 35 Vol.-% $Al_2O_3$, 7 Stunden lang attritiert, getrocknet und bei 900 MPa isogepreßt. Anschließend wurden die Proben in Vakuum mit 15 K/min auf 1550°C aufgeheizt und 1 Stunde auf dieser Temperatur gehalten. Die Schrumpfung betrug danach 9,8 % bei einer Enddichte von über 95 % TD. Das Gefüge bestand zu 65 Vol.-% aus $Al_2O_3$, ca. 20 Vol.-% AlFe und $Fe_3Al$. Weitere Ti- und Fe-haltige intermetallische Phasen mit ca. 15 Vol.-% Anteil konnten nicht eindeutig identifiziert werden.

Beispiel 30

Das Ilmenit in Beispiel 29 wurde durch 20 Vol.-% Zirkon ($ZrSiO_4$) (Westralian Sands Ltd. Capel, Australien, < 10 µm) ersetzt. Nach der Reaktionssinterung bestanden die Proben ebenfalls aus ca. 65 Vol.-% $Al_2O_3$, außerdem 5 Vol.-% $ZrO_2$, sowie eine Mischung aus $Zr_2Al$ und weiteren noch nicht identifizierten Phasen.

Beispiel 31

Wie in Beispiel 2 wurde eine Mischung aus 7,4 g Al, 16,1 g Fe und 26,5 g $Al_2O_3$ 8 h attritiert, getrocknet und bei 300 MPa isogepreßt. Danach wurden die Proben mit 30 K/min auf 1550°C im Vakuum aufgeheizt und 1 h bei dieser Temperatur gehalten. Die Schrumpfung betrug ca. 12 % bei einer Enddichte von 96,5 % TD. Der Körper bestand danach aus ca. 20 Vol.-% FeAl und ca. 80 Vol.-% $Al_2O_3$ mit eingelagerten $ZrO_2$-Teilchen mit Durchmessern zwischen 20 bis 80 nm.

Beispiel 32

189 g Al und 239,7 g $Al_2O_3$ wurden wie in Beispiel 1 attritiert, sprühgetrocknet, in $N_2$ und bei 50 MPa zu Scheiben mit den Abmessungen 30 mm Durchmesser und 8 mm Höhe uniaxial vorund mit 900 MPa isostatisch nachgepreßt. Ein Teil der Proben wurde wie in Beispiel 2 wärmbehandelt. Danach wiesen die Proben eine Dichte von ~ 95 % TD (bezogen auf TiAl und $Al_2O_3$) bei einer Phasenzusammensetzung von ca. 50 Vol.-% $Al_2O_3$ (mit $ZrO_2$-Teilchen) und ca. 50 Vol.-% überwiegend TiAl.

Ein anderer Teil der Grünproben wurde im Vakuum zunächst mit 30 K/min auf 400°C und anschließend mit 10 K/min aus 700°C und danch mit 50 K/min auf 1550°C aufgeheizt und bei dieser Temperatur 1 h gehalten. Die Phasenzusammensetzung war ähnlich wie bei den ersten Proben, die Dichte betrug jedoch ca. 99 % TD. die im Scheibenbiegeversuch (punch-on-three-balls) ermittelte Festigkeit betrug 690 MPa.

Beispiel 33

Proben der zweiten Serie aus Beispiel 31 wurde statt von 700°C auf 1550°C nur auf 1300°C mit 30 K/min aufgeheizt und nur eine Minute dort gehalten (Dichte über 92 % TD) . Diese Proben wurden unter Ar mit einer Frequenz von 300 KHz induktiv auf 1400 bis 1500°C aufgeheizt und bei dieser Temperatur mit einem Druck von 50 MPa mit $Si_3N_4$-Stempeln superplastisch so verformt, daß die Dichte nahezu 100 % TD betrug. Die Scheibenbiegefestigkeit war danach über 900 MPa.

### Beispiel 34

Proben aus Beispiel 1, die bei 300 MPa zu Platten isogepreßt waren, wurden im Grünzustand mit Ultraschall mit Hilfe von Kupferprofilen in einer Suspension aus $B_4C$ und Cyclohexan bearbeitet; dabei wurden durchgehende Löcher mit 5 mm Durchmesser sowie quadratische Vertiefungen mit den Abmessungen 10 x 10 mm und einer Tiefe von 4 mm mit glatten Innenflächen erzeugt. Die so bearbeiteten Proben wurden anschließend wie in Beispiel 1 reaktionsgesintert.

### Beispiel 35

Eine Mischung aus 5,3 g Al (Eckert-Werke, Nürnberg), 16,5 g $Fe_2O_3$ (Aldrich, Steinheim), 12,1 g $Al_2O_3$ (Ceralox) und 10,6 g 2Y-$ZrO_2$ (Tosoh, Tokyo) wurden wie in Beispiel 1 attritiert, getrocknet und mit 900 MPa isogepreßt. Die Rechteckproben (4 x 4 x 40 $mm^3$) wurden anschließend im Vakuum mit 30 K/min auf 1300°C aufgezeigt und dort nur 1 min gehalten. Die reaktionsgesinterten Proben bestanden danach aus ca. 15 Vol.-% überwiegend FeAl und ca. 75 Vol.-% $Al_2O_3$ mit feinverteilten 10 bis 50 nm großen tetragonalen $ZrO_2$-Teilchen. Die Dichte betrug (erstaunlicherweise) über 99 % TD unter Berücksichtigung der Dichte von AlFe und einem Anteil von 3 Gew.-% t-$ZrO_2$ innerhalb der $Al_2O_3$-Körner.

### Beispiel 35

Eine Pulvermischung aus 5,3 g Al, 41,5 g $Fe_2O_3$, 12,1 g $Al_2O_3$ und 10,6 g 2Y-$ZrO_2$ wurden wie in Beispiel 34 attritiert, gepreßt und wärmebehandelt. Auch hierbei betrug die Dichte über 99 % TD bei einer Phasenzusammensetzung von jetzt ca. 15 Vol.-% überwiegend $Fe_3Al$ und ca. 75 Vol.-% $Al_2O_3$ (bezogen auf die Dichte von $Fe_3Al$ und wiederum 3 Gew.-% t-$ZrO_2$ im $Al_2O_3$).

### Beispiel 36

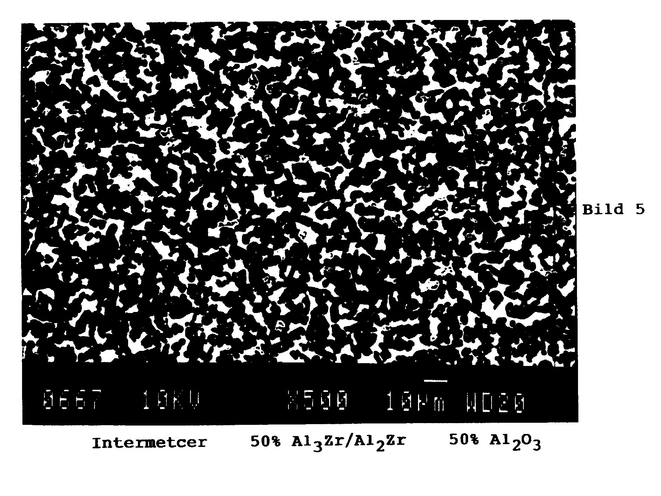

26,0 g Al und 29,2 g monoklines $ZrO_2$ (Dynamit Nobel, wie in Beispiel 24) wurden wie in Beispiel 1 attritiert und zu zylindrischen Proben (10 mm noch, 10 mm im Durchmesser) bei 900 MPa isogepreßt. Anschließend wurden die Proben im Vakuum mit 30 K/min auf 350°C, danach mit 1 K/min auf 700°C und schließlich mit 30 K/min auf 1550°C aufgeheizt und dort 1 h gehalten. Die Proben waren danach über 98 % TD dicht und bestanden aus ca. 50 Vol.-% überwiegend $ZrAl_3$ und ca. 50 Vol.-% $Al_2O_3$. Bild 5 zeigt einen lichtoptischen Schliff dieser Probe (x 1000).

### Beispiel 37

Wie in Beispiel 36 wurden a) eine Menge von 21 g Al und 29 g $ZrO_2$ und b) 17 g Al und 33 g $ZrO_2$ gemischt, gepreßt und wärmebehandelt. In allen Fällen betrug die Dichte über 98 % TD und die Phasenzusammensetzungen bei a) ca. 50 Vol.-% $ZrAl_2$ und ca. 50 Vol.-% $Al_2O_3$ und bei b) ca. 50 Vol.-% ZrAl und ca. 50 Vol.-% $Al_2O_3$.

### Beispiel 38

Wie in Beispiel 36 wurden a) 24 g Al und 26 g $Nb_2O_5$ (wie in Beispiel 9) und b) 26 g Al und 24 g $Nb_2O_5$ attritiert und gepreßt und anschließend mit 30 K/min auf 200°C, darauf mit 5 K/min auf 660°C und mit 30 K/min auf 1500°C aufgeheizt und dort 30 min gehalten. Danach betrug die Dichte bei allen Proben über 95 % TD. Bei a) war die Zusammensetzung ca. 50 Vol.-% überwiegend $NbAl_3$ und bei b) ca. 40 Vol.-% $NbAl_3$, Rest jeweils $Al_2O_3$ mit darin feinstverteilten $ZrO_2$-Teilchen.

### Beispiel 39

Wie in Beispiel 38 wurden 30 g Al, 26 g $Nb_2O_5$, 4 $Cr_2O_3$, 0,5 g $SiO_2$ und 0,5 g $Y_2O_3$ attritiert, gepreßt und wärmebehandelt, allerdings 1 h bei 1600°C gehalten. Die Proben mit einer Dichte von über 96 % TD wurden einer Oxidationsbehandlung an Luft bei 1300°C 100 h lang ausgesetzt. Die Proben besaßen danach eine weiße dünne (ca. 100 μm) dichte Schicht aus $Al_2O_3$, die sich auch nach weiteren 200 h unter denselben Bedingungen kaum veränderte.

**Patentansprüche**

1. Verfahren zur Herstellung eines keramischen Formkörpers, enthaltend a) 5 bis 70 Vol.-% mindestens einer intermetallischen Aluminid-Phase, die gegebenenfalls zusätzlich Aluminium oder/und Aluminiumlegierung enthält und b) 30 bis 95 Vol.-% einer oder mehreren keramischen Phasen, wobei die keramische Phase ein festes zusammenhängendes Gerüst bildet und die intermetallische Phase aus im Mittel 0,1 bis 10 μm großen, überwiegend miteinander verbundenen Bereichen besteht,
**dadurch gekennzeichnet,**
daß man einen pulvermetallurgisch geformten Grünkörper, der aus einem Gemisch der feinstteiligen Pulver von Aluminium, einer oder mehreren keramischen Substanzen und gegebenenfalls weiteren Metallen besteht mit der Maßgabe, daß mindestens ein oxidkeramisches oder/und metallisches Pulver im Gemisch enthalten ist, welches beim Sintern mit dem Aluminium unter Bildung eines Aluminids und gegebenenfalls von $Al_2O_3$ reagiert, in einer nicht oxidierenden Atmosphäre sintert.

2. Verfahren nach Anspruch 1,
**dadurch gekennzeichnet,**
daß die intermetallische Phase 15 bis 55 Vol.-% ausmacht.

3. Verfahren nach Anspruch 1 oder 2,
**dadurch gekennzeichnet,**
daß die keramische Phase im wesentlichen aus $Al_2O_3$ in Volumenanteilen zwischen 35 und 85 % besteht.

4. Verfahren nach einem der Ansprüche 1 bis 3,
**dadurch gekennzeichnet,**
daß die mit Al reagierende keramische Substanz oder Substanzen aus folgenden Verbindungen bzw. Erzen ausgewählt werden: $CaO$, $Cr_2O_3$, $CuO$, $Cu_2O$, $CoO$, $Co_2O_3$, $FeO$, $Fe_2O_3$, $Fe_3O_4$, $HfO_2$, $Li_2O$, $MnO$, $MgO$, $MoO_3$, $Na_2O$, $Nb_2O$, $Nb_2O_5$, $NiO$, $SiO_2$, $TiO$, $TiO_2$, $V_2O_5$, $WO_3$, $Y_2O_3$, $ZrO_2$, Mullite, Spinelle, Zirkonate, Titanate sowie Fe-, Ti-, Co-, Ni-, Zr-, Si-, Nb-haltige Erze, insbesondere Zirkon ($ZrSiO_4$) oder Ilmenit ($FeTiO_3$).

5. Verfahren nach einem der vorangehenden Ansprüche,
**dadurch gekennzeichnet,**
daß das metallische Pulver ausgewählt wird aus der Gruppe: Au, Ag, B, Ce, Cu, Ca, Cr, Co, Fe, Ge, Hf, K, U, Mo, Mg, Mn, Ni, Ta, Ti, Zn, Zr, Si, Sb, Sn, Y, Sc, W, V.

6. Verfahren nach einem der vorangehenden Ansprüche,
**dadurch gekennzeichnet,**
daß man der Pulvermischung eines oder mehrere der folgenden Aluminide TiAl, $TiAl_3$, $Ti_3Al$, $Ni_3Al$, NiAl, $Fe_3Al$, FeAl, $Zr_3Al$, $Ni_2TiAl$, $Fe_3(Al,Si)$, $NbAl_3$, $Nb_3Al$, $TaAl_3$, $Ta_3Al$, FeCrAl, $Fe_3AlC$, $Co_2TiAl$, FeTiAl, $Ti_2NbAl$, $Ti_5(Al,Si)_3$ als Keimbildner zusetzt.

7. Verfahren nach einem der vorangehenden Ansprüche,
**dadurch gekennzeichnet,**
daß der Menge x an Al eine solche Menge y an oxidischer Substanz MO zugemischt wird, daß die maximale Menge z an intermetallischer Phase MAl entsprechend der stöchiometrischen Beziehung $xAl + yMO \rightarrow zMal + aAl_2O_3$ ensteht und für alle höheren Anteile an keramischer Phase im Endprodukt zusätzliche keramische Phasen der Mischung zugegeben werden.

8. Verfahren nach einem der vorhergehenden Ansprüche,
**dadurch gekennzeichnet,**
daß man das Gemisch von feinstteiligen Pulvern in einer Kugelmühle so lange mischt und mahlt, bis die spezifische Oberfläche der Mischung mindestens 5 $m^2$/g beträgt.

9. Verfahren nach Anspruch 8,
**dadurch gekennzeichnet,**
daß man das Gemisch bis zu einer spezifischen Oberfläche der Mischung von 10 bis 40 $m^2$/g mahlt.

10. Verfahren nach Anspruch 8 oder 9,
**dadurch gekennzeichnet,**

daß man die Pulvermischung in einem flüssigen organischen Medium vermahlt.

11. Verfahren nach Anspruch 8 oder 9,
    **dadurch gekennzeichnet,**
    daß man die Pulvermischung in inerter Atmosphäre oder im Vakuum vermahlt.

12. Verfahren nach einem der Ansprüche 8 bis 11,
    **dadurch gekennzeichnet,**
    daß man Mahlkugeln aus Stahl, WC-Co, $Al_2O_3$ oder $ZrO_2$ (Y-TZP) verwendet.

13. Verfahren nach einem der Ansprüche 8 bis 12,
    **dadurch gekennzeichnet,**
    daß man das Pulvergemisch vor der Formung bei 300 bis 500°C in inerter Atmosphäre vorglüht.

14. Verfahren nach einem der vorangehenden Ansprüche,
    **dadurch gekennzeichnet,**
    daß man dem Grünkörper Verstärkungs- oder Funktionselemente in Form von Partikeln, Kugeln, Plättchen, Whiskern oder Fasern zusetzt.

15. Verfahren nach Anspruch 14,
    **dadurch gekennzeichnet,**
    daß die Verstärkungs- oder Funktionselemente in einem Volumenanteil von 5 bis 50 % zugesetzt werden.

16. Verfahren nach Anspruch 15,
    **dadurch gekennzeichnet,**
    daß die Verstärkungs- oder Funktionselemente Durchmesser zwischen 0,5 und 1000 µm besitzen.

17. Verfahren nach einem der Ansprüche 14 bis 16,
    **dadurch gekennzeichnet,**
    daß man Oxide, Carbide, Nitride, Boride oder/und Silizide als Verstärkungs- oder Funktionselemente zusetzt.

18. Verfahren nach einem der Ansprüche 14 bis 16,
    **dadurch gekennzeichnet,**
    daß man Kohlenstoff, Diamant, SiC, $Al_2O_3$, $Si_3N_4$, TiC, WC oder/und $ZrO_2$ Elemente zusetzt.

19. Verfahren nach einem der vorhergehenden Ansprüche,
    **dadurch gekennzeichnet,**
    daß man den Grünkörper durch einachsiges oder isostatisches Pressen, Schlickergießen, Spritzgießen oder Extrudieren formt.

20. Verfahren nach einem der vorhergehenden Ansprüche,
    **dadurch gekennzeichnet,**
    daß man den Grünkörper im Vakuum oder in einer Atmosphäre aus einem oder mehreren der Gase $H_2$, $N_2$, Ar oder He sintert.

21. Verfahren nach Anspruch 20,
    **dadurch gekennzeichnet,**
    daß man bei einer Temperatur von 1100 bis 1900°C, insbesonders 1350 bis 1600°C, sintert.

22. Verfahren nach Anspruch 20 oder 21,
    **dadurch gekennzeichnet,**
    daß man den Grünkörper mit einer Aufheizgeschwindigkeit von 1 bis 100°C/min sintert.

23. Verfahren nach Anspruch 20, 21 oder 22,
    **dadurch gekennzeichnet,**
    daß man den Grünkörper zunächst von Raumtemperatur bis zu einer Temperatur innerhalb des Bereichs 200 bis 400°C mit 10 bis 100°C/min danach langsam bis zu einer Temperatur im Bereich 600 bis 750°C mit 1 bis 10°C/min und danach wieder schneller mit 10 bis 100°C/min bis zur Sintertemperatur aufheizt.

24. Verfahren nach einem der Ansprüche 20 bis 23,
**dadurch gekennzeichnet,**
daß der Grünkörper induktiv gesintert bzw. nach einer Vorsinterung nach Anspruch 20 bis 23 bis zu Endtemperaturen zwischen 900 und 1300°C, anschließend induktiv im Vakuum oder inerter Atmosphäre dicht gesintert wird.

25. Verfahren nach einem der Ansprüche 20 bis 24,
**dadurch gekennzeichnet,**
daß ein bei 900 bis 1600°C reaktionsgesinterter Körper induktiv auf Temperaturen zwischen 1300 und 1700°C aufgeheizt wird und dabei superplastisch in einer Form oder frei verformt wird.

26. Abänderung des Verfahrens nach einem der Ansprüche 1 bis 19
**dadurch gekennzeichnet,**
daß man den Grünkörper in einem auf 1300 bis 1600°C vorgeheizten Ofen an Luft mit einer Aufheizrate von über 100°C/min wärmebehandelt unter Bildung einer dichten Oberflächenoxidschicht, bevor das Innere des Grünkörpers oxidieren kann.

27. Verfahren nach einem der Ansprüche 1 bis 25,
**dadurch gekennzeichnet,**
daß man nach dem Sintern in nicht oxidierender Atmosphäre in einer sauerstoffhaltigen Atmosphäre bei Temperaturen zwischen 1000 und 1600°C weiter erhitzt, bis eine $Al_2O_3$-haltige Oberflächenschutzschicht gebildet ist.

28. Verfahren nach einem der vorhergehenden Ansprüche,
**dadurch gekennzeichnet,**
daß der gesinterte Formkörper bei Temperaturen zwischen 1200 und 1600°C bei einem Druck zwischen 50 und 200 MPa heißisostatisch nachverdichtet wird.

29. Verfahren nach einem der vorhergehenden Ansprüche,
**dadurch gekennzeichnet,**
daß man den gesinterten Formkörper im Vakuum oder in inerter oder reduzierender Atmosphäre solange bei einer Temperatur zwischen 1000 und 1600°C glüht, bis das Gefüge der intermetallischen und gegebenenfalls metallischen Phase homogen ist und eine Korngröße erreicht hat, die mindestens der Größe des mittleren Durchmessers der intermetallischen oder metallischen Bereiche entspricht.

30. Verwendung eines keramischen Formkörpers, der nach einem der Ansprüche 1 bis 29 hergestellt wurde als verschleißfeste oder/und hochtemperaturfeste Komponente im Maschinen-, Apparate-, Motoren- und Turbinenbau.

31. Verwendung eines keramischen Formkörpers, der nach einem der Ansprüche 1 bis 29 erhalten wird als Friktionselement.

32. Verwendung eines Formkörpers nach den Ansprüchen 14 bis 18 als Hochleistungsbremselement.

33. Keramischer Formkörper, enthaltend a) 5 bis 70 Vol.-% mindestens einer intermetallischen Aluminid-Phase, die gegebenenfalls zusätzlich Aluminium oder/und Aluminiumlegierung enthält und b) 30 bis 95 Vol.-% einer oder mehreren keramischen Phasen,
**dadurch gekennzeichnet,**
daß die keramischen Phasen ein festes zusammenhängendes Gerüst bilden und die intermetallische Phase oder Phasen aus im Mittel 0,1 bis 10 μm großen, überwiegend miteinander verbundenen Bereichen besteht, erhältlich durch Sintern in einer nicht oxidierenden Atmosphäre eines pulvermetallurgisch geformten Grünkörpers, der aus einem Gemisch der feinstteiligen Pulver von Aluminium, einer oder mehreren keramischen Substanzen und gegebenenfalls weiteren Metallen besteht mit der Maßgabe, daß mindestens ein oxidkeramisches oder/und metallisches Pulver im Gemisch enthalten ist, welches beim Sintern mit dem Aluminium unter Bildung eines Aluminids und gegebenenfalls von $Al_2O_3$ reagiert.

34. Formkörper nach Anspruch 33,
**dadurch gekennzeichnet,**
daß er eines oder mehrere der folgenden Aluminide TiAl, $TiAl_3$, $Ti_3Al$, $Ni_3Al$, NiAl, $Fe_3Al$, FeAl, $Zr_3Al$, $Ni_2TiAl$, $Fe_3(Al,Si)$, $NbAl_3$, $Nb_3Al$, $TaAl_3$, $Ta_3Al$, FeCrAl, $Fe_3AlC$, $Co_2TiAl$, FeTiAl, $Ti_2NbAl$, $Ti_5(Al,Si)_3$ $Ti_3Al$, $TiAl_2$, $Ni_5Al_3$, $Ni_2Al_3$, $NiAl_3$, $FeAl_2$, $Fe_2Al_5$, $FeAl_3$, $Nb_2Al$, ZrAl, $ZrAl_2$, $ZrAl_3$ und CoAl enthält.

**35.** Formkörper nach Anspruch 33 oder 34,
**dadurch gekennzeichnet,**
daß die keramische Phase zusätzlich zu $Al_2O_3$ eine oder mehrere oxidische, carbidische, nitridische, boridische oder silizidische Verbindungen enthält.

**36.** Formkörper nach einem der Ansprüche 33 bis 35,
**dadurch gekennzeichnet,**
daß er $ZrO_2$ in monokliner und/oder tetragonaler Form in Volumenanteilen zwischen 1 und 15 % enthält.

## Claims

**1.** A process for fabricating a ceramic part containing a) 5 to 70 vol.% of at least one intermetallic aluminide phase, which may additionally contain aluminium and/or aluminium alloy, and b) 30 to 95 vol.% of one or more ceramic phases, the ceramic phase forming a solid, coherent skeleton and the intermetallic phase consisting of predominantly interconnected areas with an average size of 0.1 to 10 μm,
**characterized in that**
a powder-metallurgically-shaped green compact consisting of a mixture of very finely divided powders of aluminium, of one or more ceramic substances and maybe of other metals, said mixture containing at least one oxide-ceramic and/or metallic powder which, during sintering, reacts with the aluminium to form aluminide and maybe $Al_2O_3$, is sintered in a non-oxidizing atmosphere.

**2.** The process of claim 1,
**characterized in that**
the intermetallic phase makes up 15 to 55 vol.%.

**3.** A process according to claim 1 or 2,
**characterized in that**
the ceramic phase consists essentially of $Al_2O_3$, in proportions by volume of between 35 and 85%.

**4.** A process according to one of claims 1 to 3,
**characterized in that**
the ceramic substance or substances reacting with Al are selected from the following compounds or ores: CaO, $Cr_2O_3$, CuO, $Cu_2O$, CoO, $Co_2O_3$, FeO, $Fe_2O_3$, $Fe_3O_4$, $HfO_2$, $Li_2O$, MnO, MgO, $MoO_3$, $Na_2O$, $Nb_2O$, $Nb_2O_5$, NiO, $SiO_2$, TiO, $TiO_2$, $V_2O_5$, $WO_3$, $Y_2O_3$, $ZrO_2$, mullites, spinels, zirconates, titanates and Fe-, Ti-, Co-, Ni-, Zr-, Si- and Nb-containing ores, especially zircon ($ZrSiO_4$) or ilmenite ($FeTiO_3$).

**5.** A process according to one of the preceding claims,
**characterized in that**
the metallic powder is selected from: Au, Ag, B, Ce, Cu, Ca, Cr, Co, Fe, Ge, Hf, K, U, Mo, Mg, Mn, Ni, Ta, Ti, Zn, Zr, Si, Sb, Sn, Y, Sc, W, V.

**6.** A process according to one of the preceding claims,
**characterized in that**
one or more of the following aluminides are added to the powder mixture as nucleation agents: TiAl, $TiAl_3$, $Ti_3Al$, $Ni_3Al$, NiAl, $Fe_3Al$, FeAl, $Zr_3Al$, $Ni_2TiAl$, $Fe_3(Al,Si)$, $NbAl_3$, $Nb_3Al$, $TaAl_3$, $Ta_3Al$, FeCrAl, $Fe_3AlC$, $Co_2TiAl$, FeTiAl, $Ti_2NbAl$, $Ti_5(Al,Si)_3$.

**7.** A process according to one of the preceding claims,
**characterized in that**
to the quantity x of Al a quantity y of oxidic substance MO is added which is calculated such that the maximum quantity z of intermetallic phase MAl formed corresponds to the stoichiometric relation $xAl + yMO \rightarrow zMAl + aAl_2O_3$ and, for all higher proportions of ceramic phase in the fnal product, additional ceramic phases are added to the mixture.

**8.** A process according to one of the preceding claims,
**characterized in that**
the mixture of very finely divided powders is mixed and ground in a ball mill for such a period of time that the specific surface area of the mixture is at least 5 m$^2$/g.

9. The process of claim 8,
   **characterized in that**
   the mixture is ground until the specific surface area of the mixture is 10 to 40 m$^2$/g.

10. A process according to claim 8 or 9,
    **characterized in that**
    the powder mixture is ground in a liquid organic medium.

11. A process according to claim 8 or 9,
    **characterized in that**
    the powder mixture is ground in an inert atmosphere or under vacuum.

12. A process according to one of claims 8 to 11,
    **characterized in that**
    milling balls made of steel, WC-Co, Al$_2$O$_3$ or ZrO$_2$ (Y-TZP) are used.

13. A process according to one of claims 8 to 12,
    **characterized in that**
    the powder mixture is annealed at 300 to 500°C in an inert atmosphere prior to being shaped.

14. A process according to one of the preceding claims,
    **characterized in that**
    strengthening or functional elements in the form of particles, spheres, platelets, whiskers or fibres are added to the green compact.

15. The process of claim 14,
    **characterized in that**
    the strengthening or functional elements are added in a proportion by volume of 5 to 50%.

16. The process of claim 15,
    **characterized in that**
    the strengthening or functional elements measure between 0.5 and 1 000 µm in diameter.

17. A process according to one of claims 14 to 16,
    **characterized in that**
    oxides, carbides, nitrides, borides and/or silicides are added as strengthening or functional elements.

18. A process according to one of claims 14 to 16,
    **characterized in that**
    carbon, diamond, SiC, Al$_2$O$_3$, Si$_3$N$_4$, TiC, WC and/or ZrO$_2$ elements are added.

19. A process according to one of the preceding claims,
    **characterized in that**
    the green compact is shaped by uniaxial or isostatic pressing, slip-casting, injection moulding or extrusion.

20. A process according to one of the preceding claims,
    **characterized in that**
    the green compact is sintered under vacuum or in an atmosphere of one or more of the gases H$_2$, N$_2$, Ar or He.

21. The process of claim 20,
    **characterized in that**
    sintering takes place at a temperature of 1 100 to 1 900°C, especially 1 350 to 1 600°C.

22. A process according to claim 20 or 21,
    **characterized in that**
    the green compact is sintered at a heating rate of 1 to 100°C/min.

23. A process according to claim 20, 21 or 22,
    **characterized in that**
    the green compact is first heated from room temperature to a temperature within the range from 200 to 400°C at a rate of 10 to 100°C/min, then slowly to a temperature in the range from 600 to 750°C at a rate of 1 to 10°C/min, and thereafter more quickly again, at a rate of 10 to 100°C/min, up to the sintering temperature.

24. A process according to one of claims 20 to 23,
    **characterized in that**
    the green compact is inductively sintered or, after presintering according to claim 20 to 23 up to final temperatures between 900 and 1 300°C, is sintered inductively to full density under vacuum or in an inert atmosphere.

25. A process according to one of claims 20 to 24,
    **characterized in that**
    a compact reaction-sintered at 900 - 1 600°C is heated inductively to temperatures between 1 300 and 1 700°C, at the same time being formed superplastically in a die or free-standing.

26. A modification of the process according to one of claims 1 to 19,
    **characterized in that**
    the green compact is heat-treated in air - at a heating rate of > 100°C/min - in a furnace preheated to 1 300 to 1 600°C, with a dense layer of surface oxide being formed before the interior of the green compact can oxidize.

27. A process according to one of claims 1 to 25,
    **characterized in that**
    the part, having been sintered in a non-oxidizing atmosphere, is heated further in an oxygen-containing atmosphere at temperatures between 1 000 and 1 600°C for such a period of time that an $Al_2O_3$-containing protective layer is formed at the surface.

28. A process according to one of the preceding claims,
    **characterized in that**
    the sintered part is post-densified by means of hot isostatic pressing at temperatures between 1 200°C and 1 600°C and a pressure between 50 and 200 MPa.

29. A process according to one of the preceding claims,
    **characterized in that**
    the sintered part is annealed under vacuum or in an inert or reducing atmosphere at a temperature between 1 000 and 1 600 for such a period of time that the microstructure of the intermetallic and maybe of the metallic phase is homogeneous and the diameter of the grains corresponds at least to the average diameter of the intermetallic or metallic areas.

30. Use of a ceramic part fabricated according to one of claims 1 to 29 as wear-resistant and/or high-temperature-resistant component for the construction of machinery, apparatus, engines and turbines.

31. Use of a ceramic part fabricated according to one of claims 1 to 29 as frictional element.

32. Use of a part according to claims 14 to 18 as high-performance brake element.

33. Ceramic part, containing a) 5 to 70 vol.% of at least one intermetallic aluminide phase, which may additionally contain aluminium and/or aluminium alloy, and b) 30 to 95 vol.% of one or more ceramic phases,
    **characterized in that**
    the ceramic phases form a solid coherent skeleton and the intermetallic phase or phases consist of predominantly interconnected areas with an average size of 0.1 to 10 μm, said part being obtained by sintering, in a non-oxidizing atmosphere, a powder-metallurgically-shaped green compact which consists of a mixture of very finely divided powders of aluminium, of one or more ceramic substances and maybe of other metals, the mixture containing at least one oxide-ceramic and/or metallic powder which, during sintering, reacts with the aluminium to form an aluminide and maybe $Al_2O_3$.

34. A part according to claim 33,
    **characterized in that**

it contains one or more of the following aluminides: TiAl, TiAl$_3$, Ti$_3$Al, Ni$_3$Al, NiAl, Fe$_3$Al, FeAl, Zr$_3$Al, Ni$_2$TiAl, Fe$_3$(Al,Si), NbAl$_3$, Nb$_3$Al, TaAl$_3$, Ta$_3$Al, FeCrAl, Fe$_3$AlC, Co$_2$TiAl, FeTiAl, Ti$_2$NbAl, Ti$_5$(Al,Si)$_3$, TiAl$_2$, Ni$_5$Al$_3$, Ni$_2$Al$_3$, NiAl$_3$, FeAl$_2$, Fe$_2$Al$_5$, FeAl$_3$, Nb$_2$Al, ZrAl, ZrAl$_2$, ZrAl$_3$ and CoAl.

**35.** A part according to claim 33 or 34,
**characterized in that**
the ceramic phase contains, in addition to Al$_2$O$_3$, one or more oxide, carbide, nitride, boride or silicide compounds.

**36.** A part according to one of claims 33 to 35,
**characterized in that**
it contains ZrO$_2$ in monoclinic and/or tetragonal form in a proportion by volume of between 1 and 15 %.

## Revendications

**1.** Procédé pour la préparation d'un corps moulé en céramique contenant a) 5 à 70 % en volume d'au moins une phase aluminure intermétallique, qui éventuellement contient de plus de l'aluminium et/ou un alliage d'aluminium et b) 30 à 95 % en volume d'une ou de plusieurs phases céramique, la phase céramique formant une structure cohérente solide et la phase intermétallique étant constituée en moyenne de zones de façon prédominante reliées entre elles en moyenne de 0,1 à 10 µm de grandeur,
caractérisé en ce que
l'on agglomère dans une atmosphère non oxydante un corps vert formé par métallurgie des poudres, corps vert qui est constitué par un mélange de poudres finement divisées d'aluminium, d'une ou de plusieurs substances céramique et éventuellement d'autres métaux dans la mesure où au moins une poudre céramique oxyde et/ou métallique est contenue dans le mélange et qui lors de l'agglomération avec l'aluminium réagit lors de la formation d'un aluminure et éventuellement de Al$_2$O$_3$.

**2.** Procédé selon la revendication 1,
caractérisé en ce que
la phase intermétallique représente 15 à 55 % en volume.

**3.** Procédé selon la revendication 1 ou 2,
caractérisé en ce que
la phase céramique consiste essentiellement en Al$_2$O$_3$ dans des proportions volumiques entre 35 et 85 %.

**4.** Procédé selon l'une des revendications 1 à 3,
caractérisé en ce que
la ou les substances céramique réagissant avec Al sont sélectionnées à partir des composés ou minerais suivants : CaO, Cr$_2$O$_3$, CuO, Cu$_2$O, CoO, CO$_2$O$_3$, FeO, Fe$_2$O$_3$, Fe$_3$O$_4$, HfO$_2$, Li$_2$O, MnO, MgO, MoO$_3$, Na$_2$O, Nb$_2$O, Nb$_2$O$_5$, NiO, SiO$_2$, TiO, TiO$_2$, V$_2$O$_5$, WO$_3$, Y$_2$O$_3$, ZrO$_2$, mullite, spinelles, zirconate, titanate ainsi que des minéraux contenant Fe, Ti, Co, Ni, Zr, Si, Nb, en particulier le zirconium (ZrSiO$_4$) ou l'ilménite (FeTiO$_3$).

**5.** Procédé selon l'une des revendications précédentes,
caractérisé en ce que
la poudre métallique est choisie dans le groupe : Au, Ag, B, Ce, Cu, Ca, Cr, Co, Fe, Ge, Hf, K, U, Mo, Mg, Mn, Ni, Ta, Ti, Zn, Zr, Si, Sb, Sn, Y, Sc, W, V.

**6.** Procédé selon l'une des revendications précédentes,
caractérisé en ce que
l'on ajoute au mélange de poudre un ou plusieurs des aluminures suivants TiAl, TiAl$_3$, Ti$_3$Al, Ni$_3$Al, NiAl, Fe$_3$Al, FeAl, Zr$_3$Al, Ni$_2$TiAl, Fe$_3$(Al, Si), NbAl$_3$, Nb$_3$Al, TaAl$_3$, Ta$_3$Al, FeCrAl, Fe$_3$AlC, Co$_2$TiAl, FeTiAl, Ti$_2$NbAl, Ti$_5$(Al, Si)$_3$ comme agents de germination.

**7.** Procédé selon l'une des revendications précédentes,
caractérisé en ce que
l'on ajoute et on mélange à la quantité x en Al, une telle quantité y en substance oxydique Mo de façon à produire la quantité maximum z en phase intermétallique MAl correspondant à la relation stoechiométrique xAl + yMO → zMal + aAl$_2$O$_3$ et pour toutes les proportions supérieures en phase céramique dans le produit final, on ajoute au mélange des phases céramique supplémentaires.

8. Procédé selon l'une des revendications précédentes,
caractérisé en ce que
l'on mélange et broie finement le mélange de poudre finement divisé dans un broyeur à boulets jusqu'à ce que la surface spécifique du mélange soit d'au moins 5 $m^2$/g.

9. Procédé selon la revendication 8,
caractérisé en ce que
l'on broie finement le mélange jusqu'à une surface spécifique du mélange de 10 à 40 $m^2$/g.

10. Procédé selon la revendication 8 ou 9,
caractérisé en ce que
l'on broie le mélange de poudre dans un milieu organique liquide.

11. Procédé selon la revendication 8 ou 9,
caractérisé en ce que
l'on broie le mélange de poudre sous atmosphère inerte ou sous vide.

12. Procédé selon l'une des revendications 8 à 11,
caractérisé en ce que
l'on utilise des boulets de broyage en acier WC-Co, $Al_2O_3$ ou $ZrO_2$(Y-TZP).

13. Procédé selon l'une des revendications 8 à 12,
caractérisé en ce que
l'on précuit le mélange de poudre avant le formage à 300 jusqu'à 500°C sous atmosphère inerte.

14. Procédé selon l'une des revendications précédentes,
caractérisé en ce que
l'on ajoute au corps vert des éléments de renfort ou éléments fonctionnels sous forme de particules, billes, plaquettes, barbes ou fibres.

15. Procédé selon la revendication 14,
caractérisé en ce que
les éléments de renforcement ou fonctionnels sont ajoutés dans une proportion volumique de 5 à 50 %.

16. Procédé selon la revendication 15,
caractérisé en ce que
les éléments de renforcement ou fonctionnels ont un diamètre entre 0,5 et 1000 $\mu$m.

17. Procédé selon l'une des revendications 14 à 16,
caractérisé en ce que
l'on ajoute des oxydes, carbures, nitrures, borures ou/et siliciures comme éléments de renforcement ou éléments fonctionnels.

18. Procédé selon l'une des revendications 14 à 16,
caractérisé en ce que
l'on ajoute du carbone, du diamant, SiC, $Al_2O_3$, $Si_3N_4$, TiC, WC ou/et des éléments $ZrO_2$.

19. Procédé selon l'une des revendications précédentes,
caractérisé en ce que
l'on forme des corps verts par pressage uniaxial ou isostatique, coulée en barbotine, coulée par pulvérisation ou extrusion.

20. Procédé selon l'une des revendications précédentes,
caractérisé en ce que
l'on agglomère le corps vert sous vide ou sous une atmosphère constituée d'un ou plusieurs des gaz $H_2$, $N_2$, Ar ou He.

**21.** Procédé selon la revendication 20,
caractérisé en ce que
l'on agglomère à une température de 1100 à 1900°C, en particulier 1350 à 1600°C.

**22.** Procédé selon la revendication 20 ou 21,
caractérisé en ce que
l'on agglomère le corps vert avec une vitesse de chauffage de 1 à 100°C/minute.

**23.** Procédé selon la revendication 20, 21 ou 22,
caractérisé en ce que
l'on réchauffe le corps vert tout d'abord depuis la température ambiante jusqu'à une température à l'intérieur de la plage de 200 à 400°C à raison de 10 à 100°C/minute d'abord lentement puis jusqu'à une température dans la plage de 600 à 750°C à raison de 1 à 10°C/minute et ensuite à nouveau plus rapidement à raison de 10 à 100°C/minute jusqu'à une température d'agglomération.

**24.** Procédé selon l'une des revendications 20 à 23, caractérisé en ce que le corps vert est fritté par induction ou après un préfrittage selon les revendications 20 à 23 jusqu'à des températures finales entre 900 et 1300°C puis par induction sous vide ou sous atmosphère inerte hermétiquement.

**25.** Procédé selon l'une des revendications 20 à 24, caractérisé en ce que
un corps aggloméré par réaction à 900 jusqu'à 1600°C inductivement est porté à des températures entre 1300 et 1700°C et ainsi formé superplastiquement ou librement.

**26.** Variante du procédé selon l'une des revendications 1 à 19,
caractérisée en ce que
l'on traite thermiquement le corps vert dans un four chauffé à 1300 jusqu'à 1600°C à l'air à une cadence de chauffage dépassant 100°C/minute en formant une couche d'oxyde superficielle étanche avant l'oxydation de l'intérieur du corps vert.

**27.** Procédé selon l'une des revendications 1 à 25,
caractérisé en ce que
après le frittage dans une atmosphère non oxydante dans une atmosphère contenant de l'oxygène, on chauffe à des températures entre 1000 et 1600°C jusqu'à la formation d'une couche de protection superficielle contenant de l'$Al_2O_3$.

**28.** Procédé selon l'une des revendications précédentes,
caractérisé en ce que le corps moulé fritté est rendu davantage étanche isostatiquement à chaud à des températures entre 1200 et 1600°C sous une pression entre 50 et 200 MPa.

**29.** Procédé selon l'une des revendications précédentes,
caractérisé en ce que
l'on recuit le corps moulé fritté sous vide ou sous atmosphère inerte ou réductrice à une température entre 1000 et 1600°C jusqu'à ce que la texture de la phase intermétallique et éventuellement intermétallique soit homogène et atteigne une granulométrie qui correspond au moins à la grosseur du diamètre moyen des zones intermétalliques ou métalliques.

**30.** Utilisation d'un corps moulé céramique, fabriqué selon l'une des revendications 1 à 29, en tant que composant résistant à l'usure et/ou aux températures élevées dans la construction de machines, appareils, moteurs et turbines.

**31.** Utilisation d'un corps moulé céramique, qui est obtenu selon l'une des revendications 1 à 29, comme élément de friction.

**32.** Utilisation d'un corps moulé selon les revendications 14 à 18, en tant qu'élément de freinage haute performance.

**33.** Corps moulé en céramique contenant a) 5 à 70 % en volume d'au moins une phase d'aluminure intermétallique qui contient éventuellement à titre supplémentaire de l'aluminium et/ou un alliage d'aluminium et b) 30 à 95 % en volume d'une ou plusieurs phases céramique,

caractérisé en ce que

les phases céramique forment une structure cohérente, solide et les phases ou la phase intermétallique consiste(nt) en des zones de façon prédominante reliées entre elles en moyenne de 0,1 à 10 µm de grosseur pouvant être obtenues par frittage ou agglomération sous une atmosphère non oxydante d'un corps vert formé par la métallurgie des poudres sous atmosphère non oxydante et qui est constitué par un mélange de poudres d'aluminium finement divisé, d'une ou de plusieurs substances céramique et éventuellement d'autres métaux dans la mesure où il contient au moins dans le mélange une poudre céramique oxyde et/ou métallique qui lors de l'agglomération ou frittage réagit avec l'aluminium pour former un aluminure et éventuellement $Al_2O_3$.

34. Corps moulé selon la revendication 33,
caractérisé en ce que

il contient un ou plusieurs des aluminures suivants TiAl, $TiAl_3$, $Ti_3Al$, $Ni_3Al$, NiAl, $Fe_3Al$, FeAl, $Zr_3Al$, $Ni_2TiAl$, $Fe_3(Al, Si)$, $NbAl_3$, $Nb_3Al$, $TaAl_3$, $Ta_3Al$, FeCrAl, $Fe_3AlC$, $Co_2TiAl$, FeTiAl, $Ti_2NbAl$, $Ti_5(Al, Si)_3$, $Ti_3Al$, $TiAl_2$, $Ni_5Al_3$, $Ni_2Al_3$, $NiAl_3$, $FeAl_2$, $Fe_2Al_5$, $FeAl_3$, $Nb_2Al$, ZrAl, $ZrAl_2$, $ZrAl_3$ et CoAl.

35. Corps moulé selon l'une des revendications 33 ou 34,
caractérisé en ce que

la phase céramique contient en plus de $Al_2O_3$, un ou plusieurs composés d'oxyde, de carbure, de nitrure, de borure ou de siliciure.

36. Corps moulé selon l'une des revendications 33 à 35,
caractérisé en ce que

il contient $ZrO_2$ sous forme monoclinale et/ou tétragonale dans des rapports volumiques entre 1 et 15 %.

Bild 1

45% Al    35% Al$_2$O$_3$    20% 2Y-TZP

Bild 3

25% Al    25% Ti    18,2% 2Y-TZP    31,8% Al$_2$O$_3$

Bild 2a

**Saphirfasern    45% Al    35% Al$_2$O$_3$    20% 2Y-TZP**

Bild 2b

Bild 4a

**24% Al     18% Fe     37% Al$_2$O$_3$     21% 2Y-TZP**

Bild 4b

Bild 5

Intermetcer     50% Al$_3$Zr/Al$_2$Zr     50% Al$_2$O$_3$